# EUROPEAN PATENT APPLICATION

(11) **EP 4 482 060 A1**
(43) Date of publication of application: **25.12.2024**
(21) Application number: 23756479.4
(22) Date of filing: 17.02.2023
(51) Int. Cl.: H04J 3/00

(54) **COMMUNICATION DEVICE AND COMMUNICATION SYSTEM**

(30) Priority: 18.02.2022 US 202263311648 P; 15.02.2023 US 202318110046
(71) Applicant: Sony Semiconductor Solutions Corporation, Atsugi-shi, Kanagawa 243-0014 (JP)
(72) Inventor: YAMADA Junya, Atsugi-shi, Kanagawa 243-0014 (JP); HYAKUDAI Toshihisa, Paramus, New Jersey 07652 (US); OTA Satoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/005831
(87) International publication number: WO 2023/157955

(57) **Abstract**

A plurality of pieces of error information can be efficiently read.

A communication device that alternately transmits and receives information to and from a communication partner device within a period allocated by a TDD communication method includes: a PHY configured to receive a first transmission signal conforming to a predetermined communication protocol from the communication partner device, perform error correction for a plurality of first packets included in the first transmission signal, and transmit a second transmission signal to be transmitted to the communication partner device to the communication partner device; a LINK configured to separate the plurality of first packets, aggregate a plurality of second packets included in the second transmission signal, and transmits the aggregated second packets to the PHY; a plurality of decoders configured to decode the plurality of first packets; and a plurality of encoders configured to generate the plurality of second packets, in which the PHY includes an error information storage unit configured to store error information for each of the plurality of decoders and the plurality of encoders, and an operation, administration, and maintenance (OAM) unit configured to include the error information in one second packet of the plurality of second packets.

## Description

### TECHNICAL FIELD

The present disclosure relates to a communication device and a communication system.

### BACKGROUND ART

A technique for performing high-speed serial communication between a plurality of devices has been proposed (Patent Document 1). This type of high-speed serial communication is used in various fields, and is used for communication between in-vehicle devices, for example.

### CITATION LIST

### PATENT DOCUMENT

Patent Document 1: Japanese Patent Application Laid-Open No. 2011-239011

### SUMMARY OF THE INVENTION

### PROBLEMS TO BE SOLVED BY THE INVENTION

With the development of automated driving technology and electronic technology, there is an increasing need for high-speed communication between in-vehicle devices. Automotive SerDes Alliance (ASA) assumes that high-speed serial communication is performed by a time division duplexing (TDD) communication method between a Root device and a Leaf device connected to a cable.

In ASA standard Spec V1.01, up to 126 encoders and decoders that encode or decode up to 63 types of application packets can be provided in the Leaf device. Error information generated when each encoder or decoder encodes or decodes an application packet is stored in, for example, a plurality of registers.

However, in a conventional communication system, the error information stored in the plurality of registers cannot be collectively read, and needs to be read a plurality of times. Therefore, there is a problem that it takes time to read the error information stored in all the registers, and other information cannot be transmitted during the read time.

Therefore, the present disclosure provides a communication device and a communication system capable of efficiently reading a plurality of pieces of error information.

### SOLUTIONS TO PROBLEMS

To solve the above-described problem, according to the present disclosure, there is provided a communication device that alternately transmits and receives information to and from a communication partner device within a period allocated by a time division duplex (TDD) communication method, the communication device including:
a PHY configured to receive a first transmission signal conforming to a predetermined communication protocol from the communication partner device, perform error correction for a plurality of first packets included in the first transmission signal, and transmit a second transmission signal to be transmitted to the communication partner device to the communication partner device;
a LINK configured to separate the plurality of first packets, aggregate a plurality of second packets included in the second transmission signal, and transmits the aggregated second packets to the PHY;
a plurality of decoders configured to decode the plurality of first packets; and
a plurality of encoders configured to generate the plurality of second packets, in which
the PHY includes
an error information storage unit configured to store error information for each of the plurality of decoders and the plurality of encoders, and
an operation, administration, and maintenance (OAM) unit configured to include the error information in one second packet of the plurality of second packets.

The error information storage unit may store the error information in which whether or not each of the plurality of decoders and the plurality of encoders has caused an error is represented by one bit.

The error information stored in the error information storage unit may include error information about each of a decoder and an encoder included in the OAM unit.

The PHY may perform the error correction for the plurality of first packets included in the first transmission signal,
the LINK may generate the second packet including error correction disabled information indicating that the PHY fails to correctly perform the error correction, and
the error information may include reception time information of the first and second first packets that have been error-correction disabled in a transmission unit of the TDD communication method, total number information of the first packets that have been error-correction disabled in the transmission unit, and identification information of the first and second first packets that have been error-correction disabled in the transmission unit.

The error information may include error information of the LINK.

The LINK may include
a first storage unit configured to store information indicating a case of having no transmission destination information in a schedule table or that an abnormality of having no transmission destination itself has occurred,
a second storage unit configured to store information indicating a case of having no received data or that an abnormality has occurred during a reception operation, and
a third storage unit configured to store information indicating that received data is partially missing, and
the error information of the LINK includes the pieces of information stored in the first storage unit, the second storage unit, and the third storage unit.

The plurality of first packets may include at least one of an application packet or a first OAM packet, and
the second packet generated by the OAM unit may include a second OAM packet generated in response to reception of the first OAM packet.

The first OAM packet may include a first header and a first payload,
the first header or the first payload may include a transmission request of the error information, and
the OAM unit may include the error information in the second OAM packet in a case where the first OAM packet includes the transmission request of the error information.

The second OAM packet may include a second header and a second payload,
the transmission request of the error information may be included in the first header, and
the OAM unit may include the error information in the second header of the second OAM packet in a case where the first header includes the transmission request of the error information.

The second header may include mode selection information, and
the mode selection information may be set to a Reserved bit of an OAM Header of ASA spec Ver 1.01 in a case where the second header includes the error information.

The second OAM packet may include a second header and a second payload,
the transmission request of the error information may be included in the first payload, and
the OAM may include the error information in the second payload of the second OAM packet in a case where the first payload includes the transmission request of the error information.

The error information storage unit may include a plurality of banks configured to store pieces of the error information generated in different transmission units of the TDD communication method, and
the OAM unit may include the error information of a corresponding bank in the second OAM packet in a case where a transmission request of the error information of any one of the plurality of banks is included in the first OAM packet.

The LINK may clear the error information of the banks other than the bank for which the transmission request has been made in the first OAM packet from the error information storage unit.

The LINK may store the error information that has been newly generated in at least one of the cleared banks in the error information storage unit for each transmission unit.

According to the present disclosure, there is provided a communication device that alternately transmits and receives information to and from a communication partner device within a period allocated by a time division duplex (TDD) communication method, the communication device including:
a PHY configured to receive a first transmission signal conforming to a predetermined communication protocol from the communication partner device and perform error correction for a plurality of first packets included in the first transmission signal; and
a LINK configured to separate the plurality of first packets after the error correction and generate a second packet including error correction disabled information of the first packet for which the error correction has not been correctly performed, in which
the PHY transmits a second transmission signal including the second packet to the communication partner device,
the plurality of first packets includes a first OAM packet,
the second packet includes a second OAM packet,
the LINK includes a register including a plurality of banks that stores pieces of the error correction disabled information generated in different transmission units of the TDD communication method, and
the LINK includes the error correction disabled information of a corresponding bank in the register in the second OAM packet in a case where the first OAM packet includes a transmission request of the error correction disabled information of any one of the plurality of banks.

The error correction disabled information may include reception time information of an application packet that has been error-correction disabled first in the transmission unit of the transmission signal and total number information of application packets that have been error-correction disabled in the transmission unit,
the first OAM packet may include information specifying one bank among the plurality of banks and address information of the register in which the error correction disabled information of the specified bank is stored, and
the address information in the first OAM packet may include first address information specifying the reception time information in the register and second address information specifying the total number information in the register.

The error correction disabled information may include reception time information of n application packets (n is an integer of 1 or more) from first that have been error-correction disabled in the transmission unit of the transmission signal and total number information of application packets that have been error-correction disabled in the transmission unit,
the first OAM packet may include information specifying one bank among the plurality of banks and address information of the register in which the error correction disabled information of the specified bank is stored, and
the address information in the first OAM packet may include the n pieces of first address information specifying the n pieces of the reception time information in the register and second address information specifying the total number information in the register.

The error correction disabled information may include reception time information of an application packet that has been error-correction disabled first in a transmission unit of the transmission signal, total number information of application packets that have been error-correction disabled in the transmission unit, identification information of the application packet that has been error-correction disabled first in the transmission unit of the transmission signal, and bit string information in which whether or not error correction is disabled is allocated to each application packet in units of bits, the application packet being transmitted in the transmission unit,
the first OAM packet may include information specifying one bank among the plurality of banks and address information of the register in which the error correction disabled information of the specified bank is stored, and
the address information in the first OAM packet may include first address information specifying the reception time information in the register, second address information specifying the total number information in the register, third address information specifying the identification information in the register, and fourth address information specifying the bit string information in the register.

According to the present disclosure, there is provided a communication device that alternately transmits and receives information to and from a communication partner device within a period allocated by a time division duplex (TDD) communication method, the communication device including:
a LINK configured to generate a transmission packet including a plurality of first packets; and
a PHY configured to generate a first transmission signal conforming to a predetermined communication protocol on a basis of the transmission packet, transmit the first transmission signal to the communication partner device, and receive a second transmission signal from the communication partner device, in which
the LINK includes an OAM unit configured to generate, for the communication partner device, a first OAM packet including a transmission request of error information of a plurality of decoders and a plurality of encoders included in the communication partner device, and extract the error information from a second OAM packet transmitted from the communication partner device in response to the first OAM packet, and
the plurality of first packets includes an application packet and the first OAM packet.

According to the present disclosure, there is provided a communication system including:
a first communication device; and
a second communication device configured to alternately transmit and receive information to and from the first communication device within a period allocated by a time division duplex (TDD) communication method,
the first communication device including
a PHY configured to receive a first transmission signal conforming to a predetermined communication protocol from the second communication device, perform error correction for a plurality of first packets included in the first transmission signal, and transmit a second transmission signal to be transmitted to the second communication device to the second communication device,
a LINK configured to separate the plurality of first packets, aggregate a plurality of second packets included in the second transmission signal, and transmits the aggregated second packets to the PHY,
a plurality of decoders configured to decode the plurality of first packets, and
a plurality of encoders configured to generate the plurality of second packets, and
the PHY including
an error information storage unit configured to store error information for each of the plurality of decoders and the plurality of encoders, and
an operation, administration, and maintenance (OAM) unit configured to include the error information in one second packet of the plurality of second packets.

### BRIEF DESCRIPTION OF DRAWINGS

Fig. 1 is a block diagram illustrating a basic configuration of a communication system according to the present disclosure.
Fig. 2 is a block diagram illustrating an internal configuration of a Root device.
Fig. 3 is a block diagram illustrating an internal configuration of a Leaf device.
Fig. 4A is a diagram illustrating a hierarchical structure of an application packet transmitted and received between the Root device and the Leaf device.
Fig. 4B is a diagram illustrating a hierarchical structure of an OAM packet transmitted and received between the Root device and the Leaf device.
Fig. 5 is a diagram illustrating a processing operation when the OAM packet is transmitted and received in the communication system in Fig. 1.
Fig. 6 is a diagram illustrating an example in which the maximum number of CADs that can be specified by the OAM packet is 32.
Fig. 7 is a table illustrating a transmission schedule in the Root device (node1) and the Leaf device (node2).
Fig. 8 is a flowchart illustrating a processing procedure in which the node1 transmits OAM Read to the node2 by Uplink.
Fig. 9 is a flowchart illustrating a processing procedure in which the node2 transmits OAM Return to the node1 by Downlink.
Fig. 10 is a block diagram of a communication device according to a first embodiment.
Fig. 11 is a diagram illustrating packet configurations of OAM Read transmitted by node1 to node2 and OAM Return transmitted by the node2 to the node1.
Fig. 12 is a table illustrating a transmission schedule between the node1 and the node2 in the first embodiment.
Fig. 13 is a table illustrating a configuration of Extended OAM Header according to the first embodiment.
Fig. 14 is a table illustrating a modification of the Extended OAM Header in Fig. 13.
Fig. 15 is a diagram illustrating a configuration of OAM payload according to a second embodiment.
Fig. 16 is a diagram illustrating packet configurations of OAM Extended Read transmitted from node1 to node2 and OAM Extended Return transmitted from the node2 to the node1.
Fig. 17 is a table illustrating a transmission schedule according to the second embodiment.
Fig. 18 is a table illustrating error information included in the OAM Payload.
Fig. 19 is a table obtained by adding DLL error status similar to that in Fig. 14 to the error information in Fig. 18.
Fig. 20 is a diagram illustrating a first example of a defect caused by clearing of PEnc status Reg [n:0] and PDec status Reg [n:0].
Fig. 21 is a diagram illustrating a second example of the defect caused by clearing of PEnc status Reg [n:0] and PDec status Reg [n:0].
Fig. 22 is a diagram illustrating a configuration of OAM Read in a first solution.
Fig. 23 is a diagram illustrating a configuration of OAM Extended Read in a second solution.
Fig. 24 is a diagram illustrating a configuration of DLL Register (67) of a Leaf device according to a third embodiment.
Fig. 25 is a diagram illustrating a first example of performing data transfer between node1 and node2 by applying the third embodiment.
Fig. 26 is a diagram illustrating a second example of performing the data transfer between the node1 and the node2 by applying the third embodiment.
Fig. 27 is a diagram illustrating a third example of performing the data transfer between the node1 and the node2 by applying the third embodiment.
Fig. 28 is a diagram illustrating an example in which OAM DEC Err Register is provided for each bank.
Fig. 29 is a diagram illustrating an example in which 1st FEC Err Time Register and FEC Err Count Register are provided for each of Bank#0 and Bank#1 in the DLL Register.
Fig. 30 is a diagram illustrating an example in which 1st FEC Err Time Register, 1st FEC Err Time Register, 2nd FEC Err Time Register, 3rd FEC Err Time Register, and FEC Err Count Register are provided for each of Bank#0 and Bank#1 in the DLL Register.

### MODE FOR CARRYING OUT THE INVENTION

Hereinafter, embodiments of a communication device and a communication system will be described with reference to the drawings. Although main components of the communication device and the communication system will be mainly described below, the communication device and the communication system may have components and functions that are not illustrated or described. The following description does not exclude components and functions that are not depicted or described.

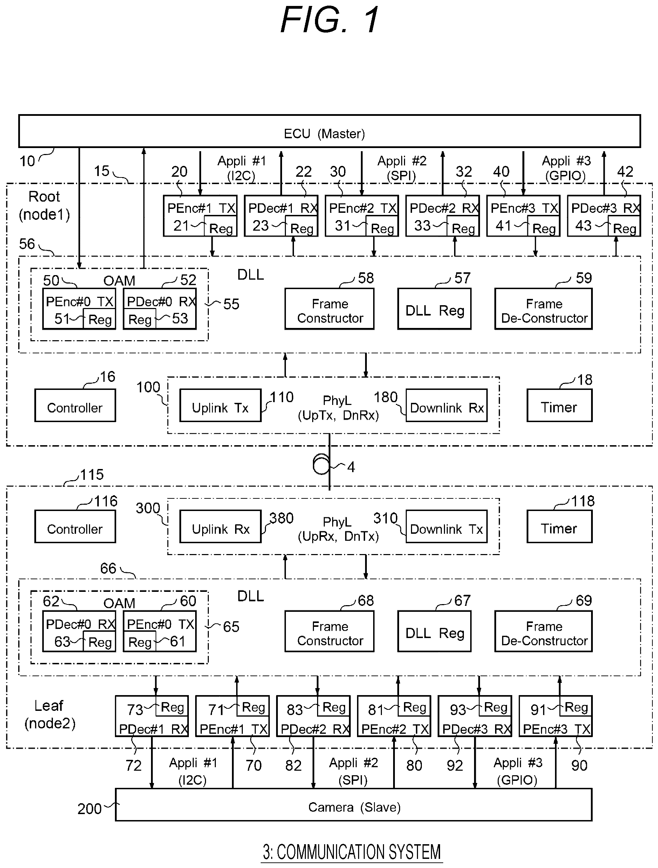

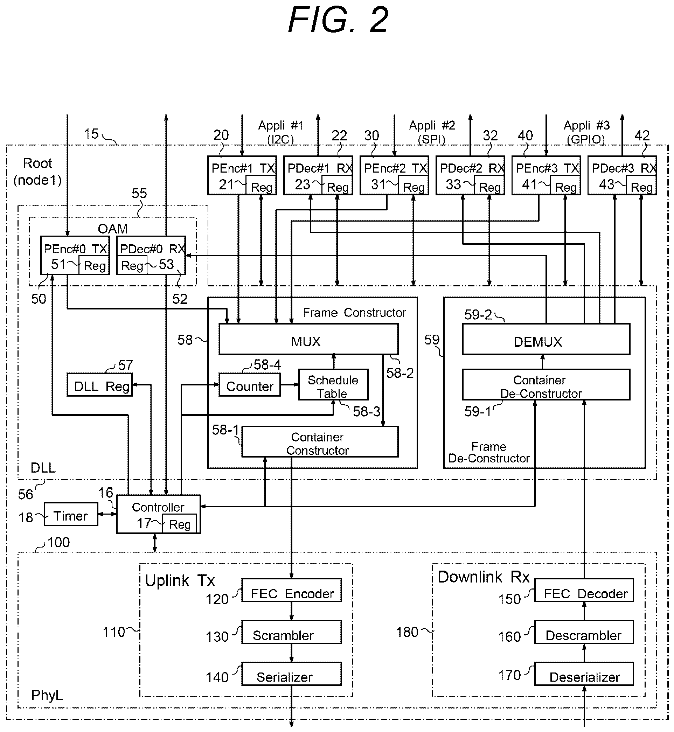

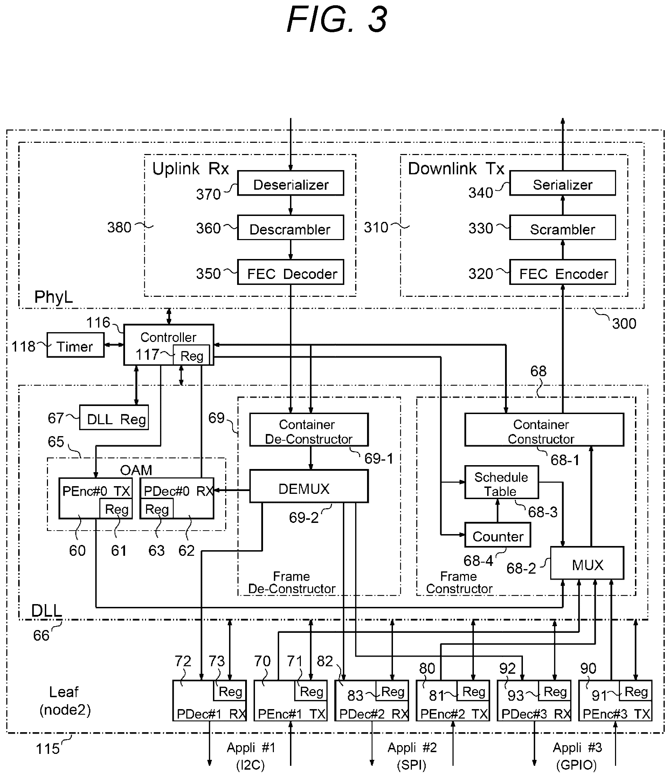

First, a basic configuration and operation of the communication device and the communication system according to the present disclosure will be described. Fig. 1 is a block diagram illustrating a basic configuration of the communication system (3) according to the present disclosure. The communication system (3) in Fig. 1 includes a Root device (15) and a Leaf device (115). Fig. 2 is a block diagram illustrating an internal configuration of the Root device (15), and Fig. 3 is a block diagram illustrating an internal configuration of the Leaf device (115). The Root device (15) and the Leaf device (115) are connected by a cable (4) and can perform high-speed serial communication.

The Root device (15) and the Leaf device (115) alternately perform serial communication by a TDD communication method in compliance with ASA. In the present specification, a path for transmitting information transmitted from the Root device (15) to the Leaf device (115) is referred to as Uplink, and a path for transmitting information transmitted from the Leaf device (115) to the Root device (15) is referred to as Downlink. The Uplink and the Downlink are virtually provided in the same cable (4). The following describes an example in which the Root device (15) is located in node1 and the Leaf device (115) is located at node2.

The Root device (15) includes an ECU (10), a packet encoder PEnc#1 (20) and a packet decoder PDec#1 (22) for internet integrated circuit (I2C), a packet encoder PEnc#2 (30) and a packet decoder PDec#2 (32) for SPI, a packet encoder PEnc#3 (40) and a packet decoder PDec#3 (42) for GPIO, a DLL (56), a PhyL (100), a controller (16), and a timer (18). Note that types of the encoders and the decoders of application packets provided in the root device (15) are not limited to those illustrated in Fig. 1.

The ECU (10) is an example of a Master device. The ECU (10) controls the entire system and simultaneously receives and processes application signals such as a video signal transmitted from the Leaf device (115). The ECU (10) generates a control signal for controlling each unit.

The PEnc#1 (20), the PEnc#2 (30), and the PEnc#3 (40) perform encoding processing of encapsulating the control signal from the ECU (10). The PDec#1 (22), the PDec#2 (32), and the PDec#3 (42) perform decoding processing of decoding the encapsulated application packets from the Leaf device (115) into original application signals.

The DLL (56) generates an Uplink packet including one or more application packets encapsulated by the PEnc#1 (20), the PEnc#2 (30), and the PEnc#3 (40), extracts one or more application packets included in a Downlink packet transmitted from the Leaf device (115), and sends the application packets to the corresponding packet decoders PDec.

The PhyL (100) outputs a transmission signal including the Uplink packet generated by the DLL (56) to the cable (4) at the timing of TDD, receives a signal including the Downlink packet sent from the Leaf device (115) to the cable (4), and sends the received Downlink packet to the DLL (56).

The controller (16) controls each unit in the Root device (15). The timer (18) is used to synchronize with the Leaf device (115).

An example in which the Root device (15) in Fig. 1 transmits the application packet including an I2C packet, an SPI packet, and a GPIO packet to the Leaf device (115) will be described, but the application packet may include a packet other than the above-described packets.

The DLL (56) includes a frame constructor (58), a frame de-constructor (59), a DLL Register (57), and an OAM unit (55).

The frame constructor (58) integrates a plurality of application packets and OAM packets to generate the Uplink packet. The frame de-constructor (59) decomposes the Downlink packet from the Leaf device (115) into a plurality of application packets and OAM packets. The DLL Register (57) records error correction disabled information and the like as will be described below.

The OAM unit (55) includes a PEnc#0 (50) that encodes the OAM packet provided separately from the application packet, and a PDec#0 (52) that decodes the OAM packet.

The PhyL (100) includes an Uplink Tx (110) that transmits the Uplink packet and a Downlink Rx (180) that receives the Downlink packet.

The Leaf device (115) includes a Camera (200), a PEnc#1 (70) and a PDec#1 (72) for internet integrated circuit (I2C), a PEnc#2 (80) and a PDec#2 (82) for SPI, a PEnc#3 (90) and a PDec#3 (92) for GPIO, a DLL (66), a PhyL (300), a controller (116), and a timer (118).

The Camera (200) is an example of a Slave device. The Camera (200) receives and processes the control signal transmitted from the Root device (15) in addition to output of image data. The Camera (200) transmits and receives the I2C packets, SPI packets, and GPIO packets to and from the Leaf device (115).

The PEnc#1 (70), the PEnc#2 (80), and the PEnc#3 (90) perform encoding processing of encapsulating the control signal from the Camera (200). The PDec#1 (72), the PDec#2 (82), and the PDec#3 (92) perform decoding processing of decoding the encapsulated application packets from the Root device (15) into the original application signals.

The DLL (66) generates a Downlink packet including one or more application packets encapsulated by the PEnc#1 (70), the PEnc#2 (80), and the PEnc#3 (90), extracts one or more application packets included in the Uplink packet transmitted from the Root device (15), and sends the application packets to the PDec#1 (72), the PDec#2 (82), and the PDec#3 (92).

The PhyL (300) outputs a signal including the Downlink packet generated by the DLL (66) to the cable (4) at the timing of TDD, receives a signal including the Uplink packet sent from the Root device (15) to the cable (4), and sends the received Uplink packet to the DLL (66).

The controller (116) controls each unit in the Leaf device (115). The timer (118) is used to synchronize with the Root device (15) .

The DLL (66) includes a frame constructor (68), a frame de-constructor (69), a DLL Register (67), and an OAM unit (65).

The frame constructor (68) integrates a plurality of application packets and OAM packets to generate the Downlink packet. The frame de-constructor (69) decomposes the Uplink packet from the Root device (15) into a plurality of application packets. The DLL Register (67) records error correction disabled information as will be described below.

The OAM unit (65) includes a PEnc#0 (60) that encodes the OAM packet provided separately from the application packet, and a PDec#0 (62) that decodes the OAM packet.

The PhyL (300) includes a Downlink Tx (310) that transmits the Downlink packet and an Uplink Rx (380) that receives the Uplink packet.

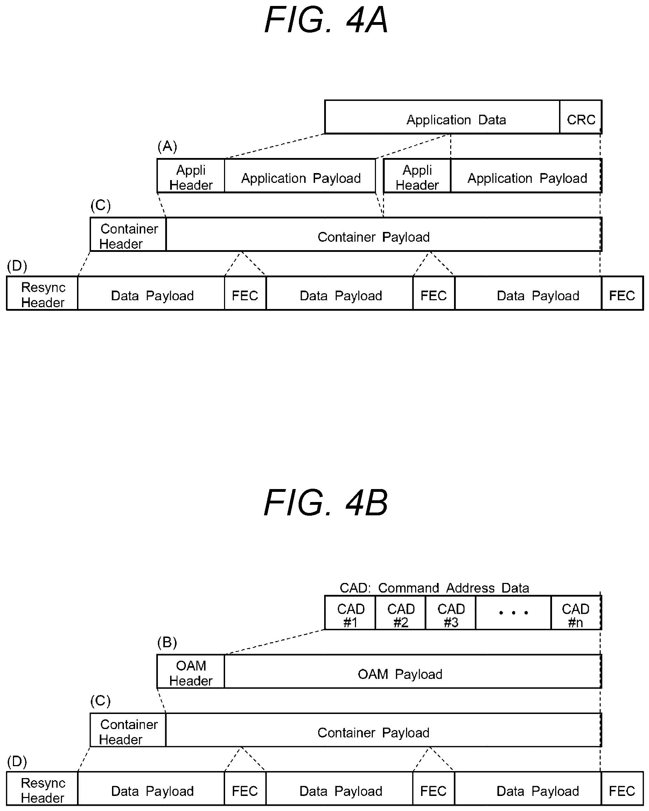

Fig. 4A is a diagram illustrating a hierarchical structure of the application packet transmitted and received between the Root device (15) and the Leaf device (115).

The application signal input to and output from the ECU (10) or the Camera (200) includes application data and a cyclic redundancy check (CRC), which is an error detection code.

As illustrated in Fig. 4A (A), the application packet input to and output from the packet encoder PEnc or the packet decoder PDec includes an application header and an application payload.

The Uplink packet or the Downlink packet input to and output from the DLL (56) or (66) is also referred to as a container, and includes a container header and a container payload as illustrated in Fig. 4A (C). The container payload includes one or more application packets.

The transmission signal input to and output from the PhyL (100) or (300) includes a Resync header and a plurality of data payloads as illustrated in Fig. 4A (D). A forward error correction (FEC) code is added to the end of each data payload.

Fig. 4B is a diagram illustrating a hierarchical structure of the OAM packet transmitted and received between the Root device (15) and the Leaf device (115).

The OAM packet is generated by the OAM unit (55) or (65) of the DLL (56) or (66). The OAM unit (55) or (65) includes one or more pieces of Command, Address, Data (CADs) including a command, an address, and data. In the basic configuration of the OAM packet, the error detection code such as the CRC is not added to the CAD.

As illustrated in Fig. 4B (B), the OAM packet includes an OAM header and an OAM payload.

The Uplink packet or the Downlink packet input to and output from the DLL (56) or (66) includes a container header and a container payload as illustrated in Fig. 4B (C), and the container payload includes the OAM packet.

The transmission signal input to and output from the PhyL (100) or (300) includes a Resync header and a plurality of data payloads as illustrated in Fig. 4B (D), and the data payload includes the OAM packet.

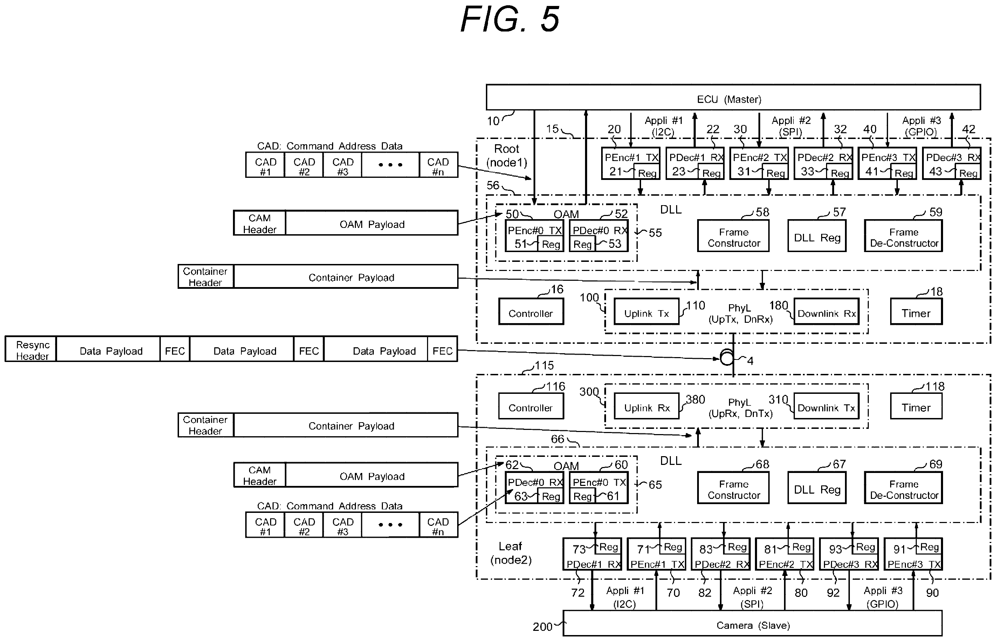

Fig. 5 is a diagram illustrating a processing operation when the OAM packet is transmitted and received in the communication system (3) in Fig. 1. The ECU (10) can transmit and receive the OAM packet between the Root device (15) and the Leaf device (115). In the example in Fig. 5, the PEnc#0 (50) or (60) is used to generate the OAM packet, and the PDec#0 (52) or (62) is used to decode the OAM packet into the original CAD (Command, Address, Data).

The PEnc#0 (50) or (60) generates the OAM packet (Fig. 4B (B)) and transmits the OAM packet to the DLL (56) or (66). The PDec#0 (52) or (62) restores the original CAD from the OAM packet (Fig. 4B (B)) output from the DLL (56) or (66).

When the PDec#0 (52) or (62) restores the original CAD from the OAM packet (Fig. 4B (B)), the PDec#0 cannot perform error detection of the received OAM packet because the payload of the OAM packet does not include the error detection code such as the CRC.

The DLL (56) or (66) incorporate the OAM packet (Fig. 4B (B)) output from the PEnc#0 (50) or (60) into the container (Fig. 4B (C)), and transmit the container to the PhyL (100) or (300). Furthermore, the OAM packet (Fig. 4B (B)) is extracted from the container (Fig. 4B (C)) output from the PhyL (100) or (300), and the OAM packet (Fig. 4B (B)) is transmitted to the corresponding PDec#0 (52) or (62).

The PhyL (100) or (300) converts the container (Fig. 4B (C)) output from the DLL (56) or (66) into a PHY format (Fig. 4B (D)) of ASA, and transmits the converted container to the Leaf device (115) or the Root device (15) that is a communication partner device.

In ASA Spec V1.01, up to 63 encoders (PEnc#) or decoders (PDec#) each encoding or decoding the application packet illustrated in Fig. 1 can be provided.

Error information generated in the PEnc# or the PDec# is stored in a plurality of registers. The error information stored in these registers can be requested to be read with the OAM packet.

However, in ASA Spec V1.01, the number of registers from which the error information, which has been generated in the PEnc# or the PDec#, can be read at a time from the plurality of registers that stores the error information is limited by an OAM Payload size.

For example, to read the registers (71, 73, 81, 83,...) of the PEnc#1 to PEnc#63 and the PDec#1 to PDec#63 in a single OAM packet called OAM Read, the CADs #1 to #126 need to be provided in the OAM Payload of the OAM Read. In a case where the maximum number of CADs that can be specified in the OAM packet is smaller than the number of registers to be read, the OAM Read needs to be divided into a plurality of OAM Reads and read, and a latency for reading all of results is a problem.

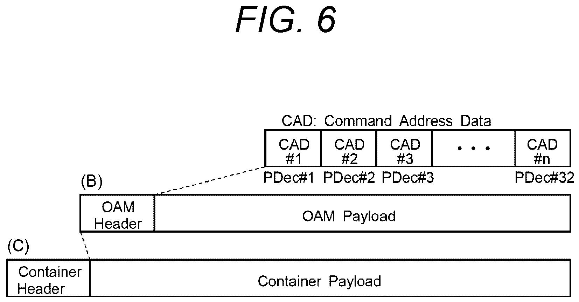

For example, Fig. 6 is a diagram illustrating an example in which the maximum number of CADs that can be specified in the OAM packet is 32. In this case, the node1 (Root device (15)) cannot read all the 126 registers (PEnc#1 to PEnc#63 and PDec#1 to PDec#63) of the node2 (Root device (115)) by the single OAM Read.

Therefore, it is necessary that the application packet Application#1 is allocated to (PDec#1/PEnc#1), Application#2 is allocated to (PDec#2/PEnc#2),..., and Application#63 is allocated to (PDec#63/PEnc#63), and the node1 repeatedly transmits the OAM Read to the node2, and the node2 repeatedly transmits OAM Return to the node1.

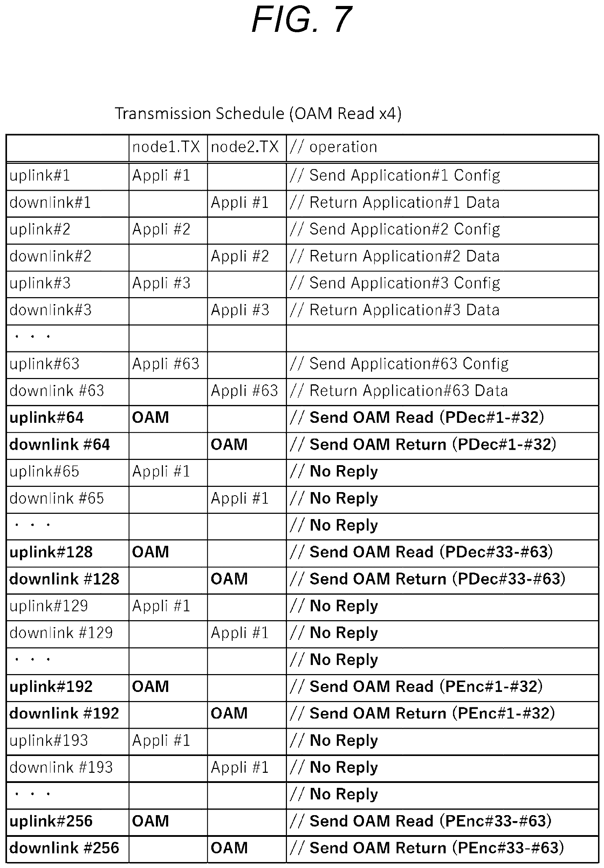

Fig. 7 is a table illustrating a transmission schedule in the node1 and the node2. As illustrated in Fig. 7, the application packets Application#1 to Application#63 and the OAM packets are alternately transmitted and received by Uplink#1 to Uplink#256 and Downlink#1 to Downlink#256.

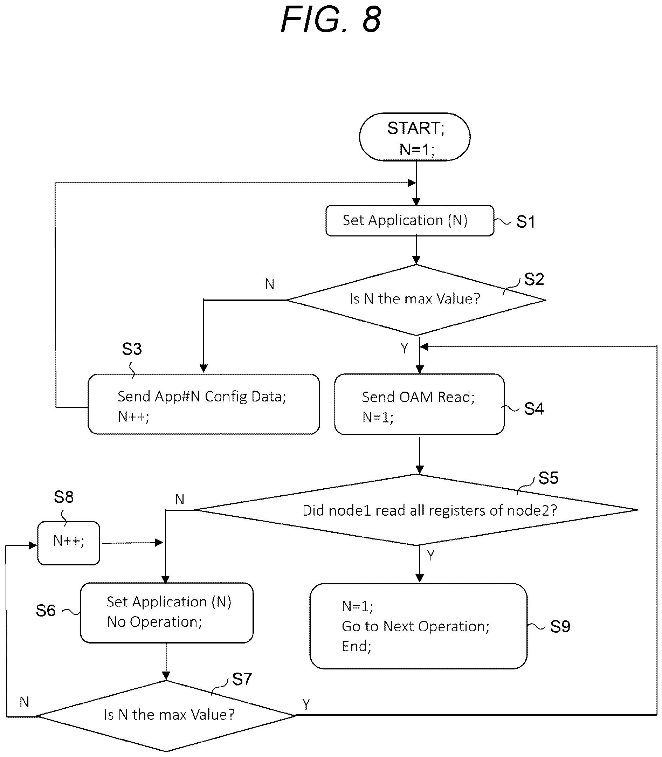

Fig. 8 is a flowchart illustrating a processing procedure in which the node1 transmits the OAM Read to the node2 by Uplink. First, an identification number N of the application packet is set to N = 1 (step S1). Next, it is determined whether or not N is a maximum value (step S2). In a case where N is not the maximum value (in a case where S2 is NO), config data of the Application#N is included in the OAM Read (step S3), and the processing returns to step S1.

In a case where step S2 is YES, the OAM Read is transmitted to the node2 and N = 1 is set (step S4).

Next, the node1 determines whether or not all the registers of the node2 have been read (step S5). In a case where step S5 is NO, the Application#N that has not yet been read is set to stand by (step S6). Next, it is determined whether or not N is the maximum value (step S7). If N is not the maximum value, N is incremented to N = N + 1 (step S8), and the processing of step S6 and the subsequent steps is repeated.

In a case where step S5 is YES, N = 1 is set, and the next processing is performed (step S9).

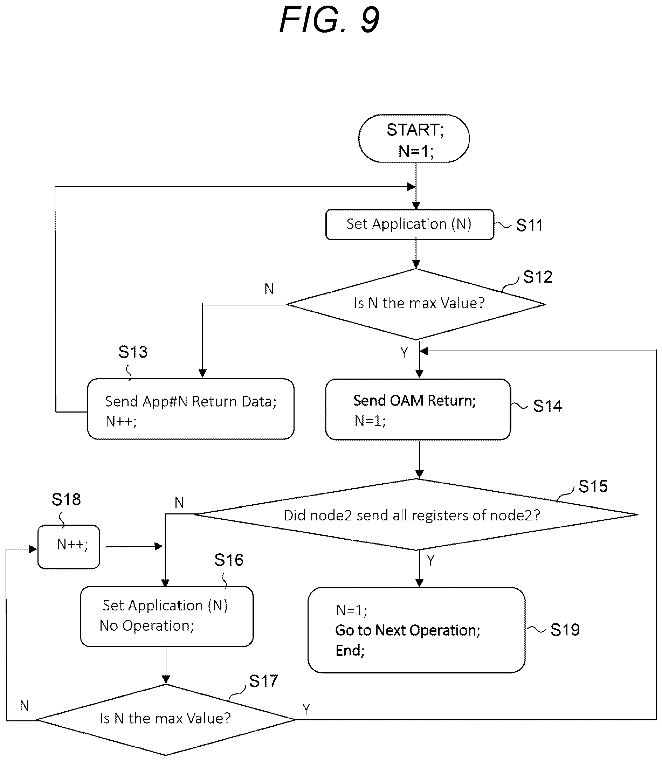

Fig. 9 is a flowchart illustrating a processing procedure in which the node2 transmits the OAM Return to the node1 by Downlink. steps S11 to S13 perform processing similar to steps S1 to S3 in Fig. 8. In a case where step S12 is YES, the OAM Return is transmitted to the node1 (step S14).

Next, the node2 determines whether or not all the registers of the node1 have been transmitted (step S15). Thereafter, steps S16 to S19 perform processing similar to steps S6 to S9 in Fig. 8.

For example, in a case where the maximum number of read addresses that can be transmitted at a time by the OAM Read is 32, a total of four OAM Reads of the Uplink#64, 128, 192, and 256 are required to specify the read addresses of all the 126 registers (Fig. 7) .

More specifically, in the Uplink#64, the OAM Read to check whether or not Config of the Application#1 to #32 among the Applications set in the Uplink#1 to #63 has been correctly received is performed. Similarly, in the Uplink#128, the OAM Read to check whether or not Config of the Application#33 to #63 has been correctly received is performed. Furthermore, in the Uplink#192, the OAM Read to check whether or not Data of the Application#1 to #32 has been correctly transmitted is performed. Furthermore, in the Uplink#256, the OAM Read to check whether or not Data of the Application#33 to #63 has been correctly transmitted is performed.

As a result, if there is no error in all the read results of the Donwlink#64, Downlink#128, Downlink#192, and Downlink#256, it can be seen that Application#1 to #63 have been normally transmitted and received, but this causes an increase in the latency of #65 to #127, #129 to #191, and #193 to #255 of the uplink/downlink corresponding to the loop of steps S6 to S8 of Fig. 8 and the loop of steps S16 to S18 of Fig. 9.

### (First Embodiment)

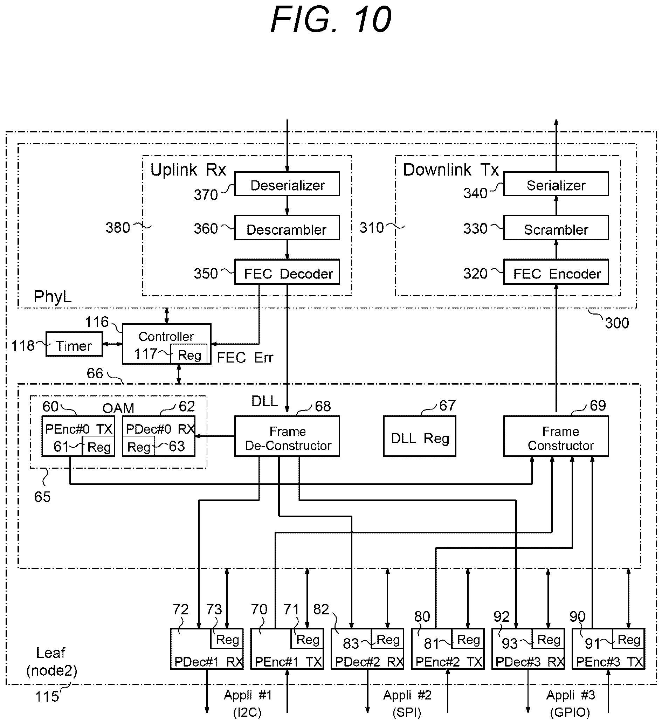

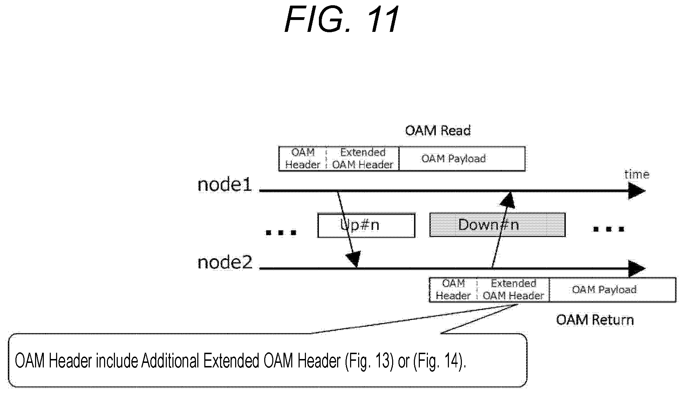

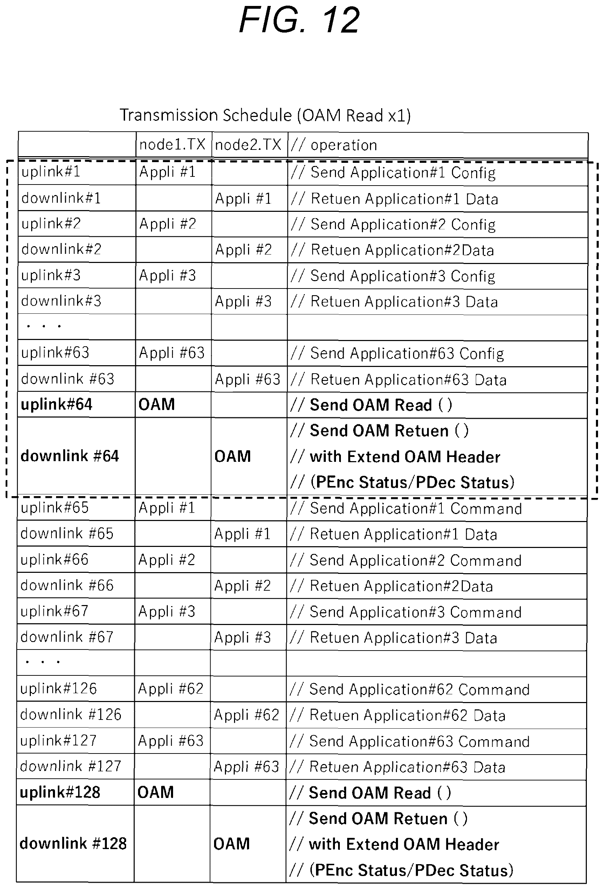

Fig. 10 is a block diagram of a communication device (Leaf device (115)) according to a first embodiment. Fig. 11 is a diagram illustrating packet configurations of OAM Read transmitted by node1 to node2 and OAM Return transmitted by the node2 to the node1. Fig. 12 is a table illustrating a transmission schedule between the node1 and the node2 in the first embodiment.

As illustrated in Fig. 11, the OAM Read transmitted by the node 1 to the node 2 and the OAM Return transmitted by the node 2 to the node 1 have Extended OAM Header. As illustrated in Fig. 12, the OAM Read and the OAM Return are transmitted and received between an interval of transmission and reception of a plurality of application packets.

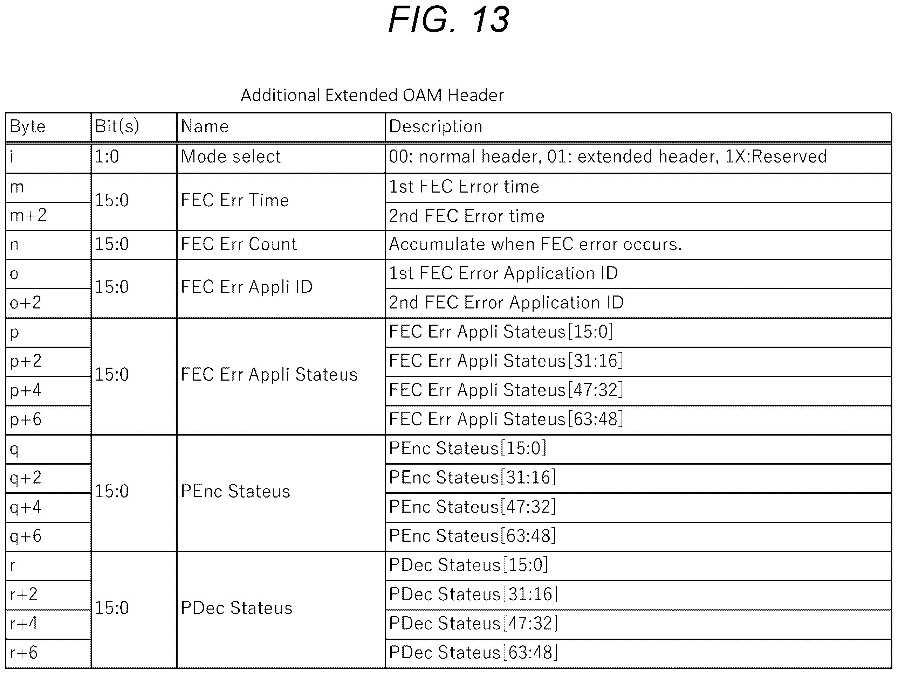

Fig. 13 is a table illustrating a configuration of the Extended OAM Header according to the first embodiment. As illustrated in Fig. 13, the Extended OAM Header according to the present embodiment includes Mode select, FEC Err time, FEC Err Count, FEC Err Appli ID, and FEC Err Appli Status, and further includes PEnc Status and PDec Status. The PEnc Status includes error occurrence information (hereinafter, error information) of all of encoders PEnc (60, 70, 80, and 90) in the Leaf device (115), and the PDec Status includes error information of all of decoders PDec (62, 72, 82, and 92) in the Leaf device (115).

In a case where the OAM Read including a transmission request of the above-described error information in the Extended OAM Header is transmitted from a Root device (15), an OAM unit (65) of the Leaf device (115) generates the OAM Return including the error information in the Extended OAM Header and transmits the OAM Return to the Root device (15).

In a case of including all pieces of the above-described error information in the Extended OAM Header, Mode select of i Byte is newly set to Reserved bits of the OAM Header described in ASA spec V1.01 (Fig. 13). In a case where a bit value of the Mode select is "00", an OAM Header configuration of the conventional ASA spec V1.01 is maintained, and the error information from the FEC Err time to the PDec Status of the Extended OAM Header is not included. On the other hand, in a case where the Mode select is "01", the error information from the FEC Err time to the PDec Status is added as the Extended OAM Header after an existing OAM header.

The FEC Err time is occurrence time information of the first and second FEC Errors. Note that third or subsequent FEC error occurrence time information may be added. The FEC Err count is a cumulative number of occurrences of the FEC Errors. The FEC Err Appli ID is an Application ID in which the first and second FEC Errors have occurred. Note that the Application ID in which the third or subsequent FEC Error has occurred may be added. The FEC Err Appli Status is information of all the Application IDs in which the FEC Error has occurred, and for example, 0 is FEC Error Application ID#0 and 1 is FEC Error Application ID#1.

The communication device in Fig. 10 is the Leaf device (115). The Leaf device (115) is located at the node2. In Fig. 10, components common to those in Fig. 3 are denoted by the same reference numerals, and differences will be mainly described below.

A DLL Register (67) of the Leaf device (115) located at the node2 (115) newly has PDec Status Reg [n:0] and PEnc Status Reg [n:0]. The PDec Status Reg [n:0] and the PEnc Status Reg [n:0] are error information storage units that store the error information of all the encoders PEnc (60, 70, 80, and 90) and all the decoders PDec (62, 72, 82, and 92) in the Leaf device (115). The OAM Return that the Leaf device (115) transmits to the Root device (15) at the node1 has Extended OAM Header illustrated in detail in Fig. 13. The Extended OAM Header includes values of the PDec Status Reg [n:0] and the PEnc Status Reg [n:0].

A cause of a latency for reading the above-described error information is that the number of register values, the number exceeding the maximum CADs that can be specified in a single transmission unit of Uplink, need to be read. Therefore, in a first solution, when an Error write occurs in the internal Registers of each PEnc and each PDec, each PEnc/PDec notifies a DLL (66) of the Error write, and the DLL (66) writes 1'b1 indicating the error occurrence in the corresponding bits of the PDec Status Reg [n:0] and the PEnc Status Reg [n:0] of the DLL Register (67).

Specifically, in a case where there is an error write in PDec#0 Reg (63), the PDec#0 notifies the DLL (66) of PDec Error, and the DLL (66) writes, in PDec Status [0] of the DLL Register (67), 1'b1 indicating that the error write has occurred in the PDec#0 Reg.

Similarly, in a case where there is an error write in PDec#1 Reg(73), the DLL (66) writes, in PDec Status [1] of the DLL Register (67), 1'b1 indicating that the error write has occurred in the PDec#1 Reg. In a case where there is an error write in PEnc#0 Reg(61), the DLL (66) writes, in PEnc Status [0] of the DLL Register (67), 1'b1 indicating that the error write has occurred in the PEnc#0 Reg.

The DLL (66) transmits PEnc Status/PDec Status information of the DLL Register (67) to the PEnc#0 (60). The PEnc#0 (60) generates an OAM Packet of the OAM Return in which information of the PEnc Status [n:0] (see Fig. 13) and the PDec Status [n:0] (see Fig. 13) is added to the Extended OAM Header of the OAM Return.

As a result, regardless of the number of CADs of OAM Payload, in Downlink#64 and Downlink/#128 as illustrated in Fig. 12, the node2 (115) can transmit the error information of all the PDec/PEnc to the node1 (15) by the single OAM Return, and it is possible to eliminate the latency of steps S6 to S8 in Fig. 8 and steps S16 to S18 in Fig. 9.

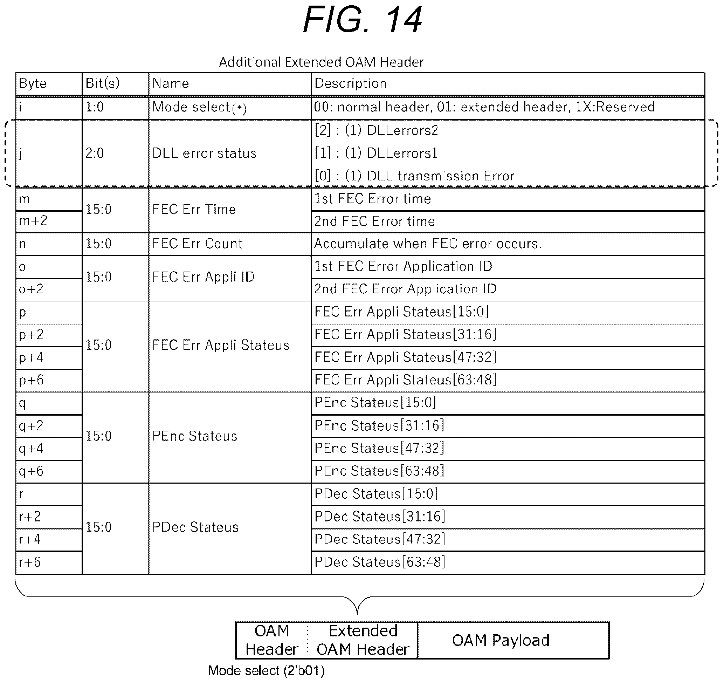

Fig. 14 is a table illustrating a modification of the Extended OAM Header in Fig. 13. The Extended OAM Header in Fig. 14 has DLL error status in addition to the configuration in Fig. 13 (the broken-line frame in Fig. 14). This DLL error status is obtained by aggregating pieces of DLL error information in the DLL Register (67).

In DLL error status [2:0], DLL error status [0] indicates an error status of DLL transmission error, DLL error status [1] indicates DLL error 1, and DLL error status [2] indicates DLL error 2. The DLL transmission error is information indicating a case of having no transmission destination information in the schedule table or that an abnormality of having no transmission destination itself has occurred. The DLL error 1 is information indicating a case of having no received data or that an abnormality has occurred during a reception operation. The DLL error 2 is information indicating that received data is partially missing.

In the case of Fig. 14, since the pieces of error information and the pieces of DLL error information of all the PEnc (60, 70, 80, and 90) and the PDec (62, 72, 82, and 92) in the Leaf device (115) are included in the Extended OAM Header of OAM Return, these pieces of error information can be transmitted to the Root device (15) in a single transmission unit of Downlink.

As described above, in the first embodiment, the pieces of error information of all the PEnc (60, 70, 80, and 90) and the PDec (62, 72, 82, and 92) in the Leaf device (115) are aggregated and stored in the DLL register (67), and these pieces of error information are collectively written in the PEnc status and the PDec status of the Extended OAM Header. Therefore, by transmitting the OAM Return including the Extended OAM Header from the node2 to the node1, the Root device (15) located at the node1 can acquire the pieces of error information of all the PEnc (60, 70, 80, and 90) and PDec (62, 72, 82, and 92) in the single transmission unit of Downlink. Therefore, the latency does not occur in acquiring the pieces of error information of all the PEnc (60, 70, 80, and 90) and the PDec (62, 72, 82, and 92), and TDD communication can be efficiently performed.

### (Second Embodiment)

In the first embodiment, the example of including the pieces of error information of all the PEnc (60, 70, 80, and 90) and the PDec (62, 72, 82, and 92) in the Extended OAM header of the OAM Return has been described, but in a second embodiment, pieces of error information of all of PEnc (60, 70, 80, and 90) and PDec (62, 72, 82, and 92) are included in OAM Payload of OAM Return.

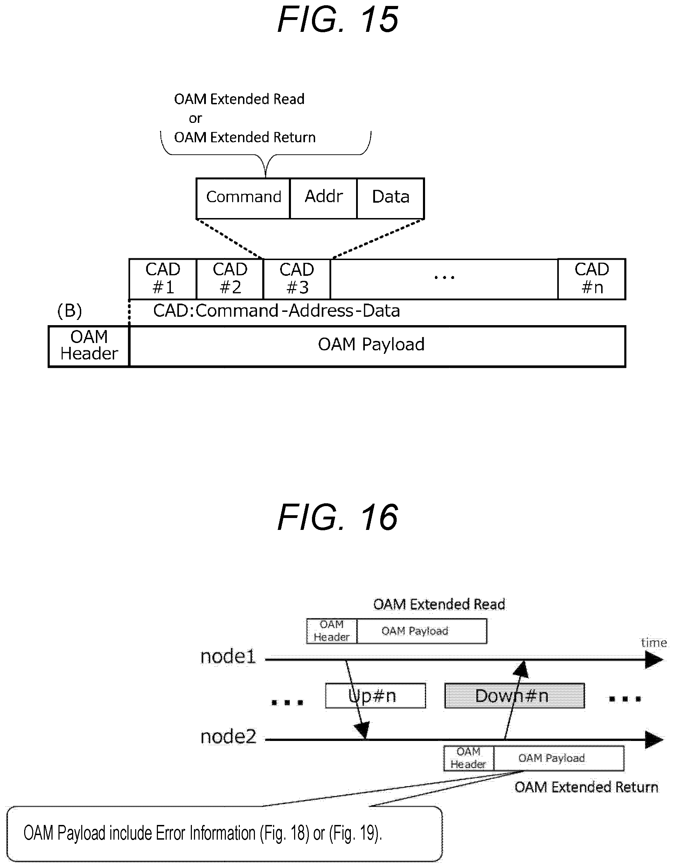

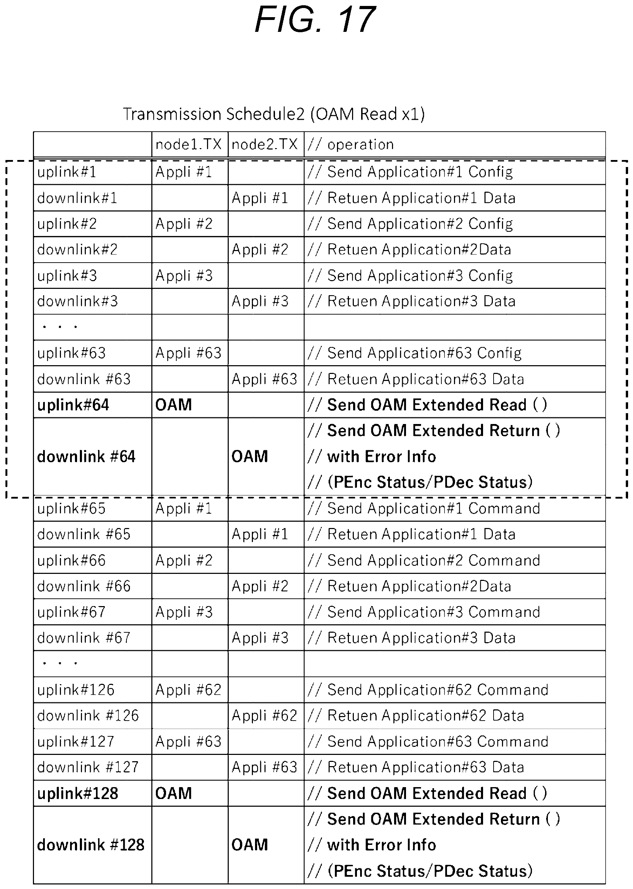

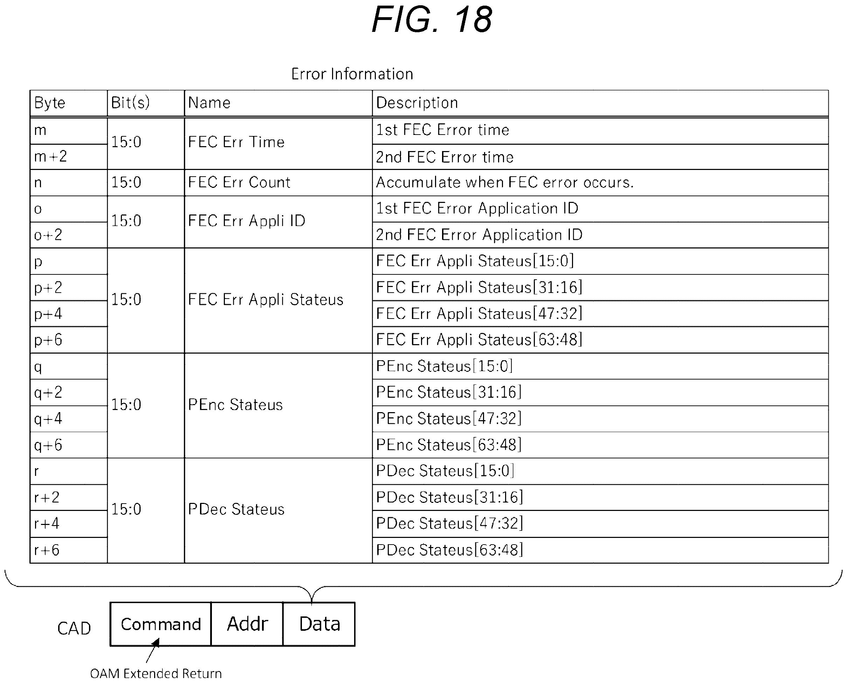

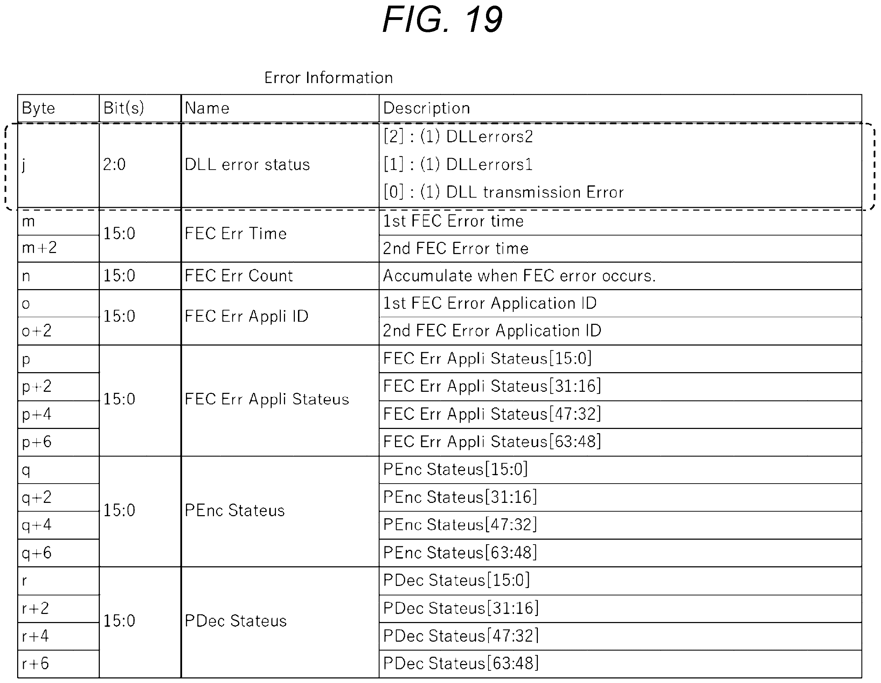

A communication device (Leaf device (115) of node 2) according to the second embodiment has a block configuration similar to Fig. 10. Fig. 15 is a diagram illustrating a configuration of the OAM Payload according to the second embodiment. Fig. 16 is a diagram illustrating packet configurations of OAM Extended Read transmitted from node1 to the node2 and OAM Extended Return transmitted from the node2 to the node1. Fig. 17 is a table illustrating a transmission schedule according to the second embodiment. Fig. 18 is a table illustrating error information included in the OAM Payload. The error information of Fig. 18 is the same as the error information of Fig. 13 except that mode select is not provided. Fig. 19 is a table obtained by adding DLL error status similar to that in Fig. 14 to the error information in Fig. 18.

As illustrated in Fig. 15, in the second embodiment, the Root device (15) of the node 1 transmits OAM Extended Read including an OAM Extended Read command for reading additional registers (PEnc status Reg [n:0] and PDec status Reg [n:0]) with the OAM Payload, and a Reaf device of the node 2 transmits OAM Extended Return including an OAM Extended Return command including a result of reading values of the additional registers.

A cause of a latency for reading the error information is that there is the number of registers, the number exceeding maximum CADs that can be specified in a single transmission unit of Uplink. Therefore, in the second embodiment, the OAM Extended Read that is a read command to aggregate and read pieces of the error information and the OAM Extended Return that is a result thereof are allocated to one CAD.

In a case where an Error write occurs in internal Registers of each PEnc and each PDec, each PEnc/PDec notifies a DLL (66) of the Error write, and the DLL (66) writes 1'b1 indicating Error occurrence in a corresponding bit of the PEnc Status Reg [n:0] or the PDec Status Reg [n:0] of a DLL Register (67).

Specifically, in a case where there is a write in PDec#0 Reg (63), the PDec#0 notifies the DLL (66) of PDec Error, and the DLL (66) writes, in PDec Status [0] of the DLL Register (67), 1'b1 indicating that the write has occurred in the PDec#0 Reg.

Similarly, in a case where there is a write in PDec#1 Reg(73), the DLL (66) writes, in PDec Status [1] of the DLL Register (67), 1'b1 indicating that the write has occurred in the PDec#1 Reg. In a case where there is a write in PEnc#0 Reg(61), the DLL (66) writes, in PEnc Status [0] of the DLL Register (67), 1'b1 indicating that the write has occurred in the PEnc#0 Reg.

The DLL (66) transmits information of the PEnc status Reg [n:0] and the PDec status Reg [n:0] of the DLL Register (67) to the PEnc#0 (60). When the PDec#0 (62) receives the OAM Extended Read from the node1, the PEnc#0 (60) generates OAM Packet of OAM Extended Return including information of PEnc Status [n:0] (see Fig. 18) and PDec Status [n:0] (see Fig. 18) in the OAM Payload, and transmits the OAM Packet to the node1.

As a result, as illustrated in Fig. 17, in the Downlink#64 and the Downlink/#128, the node2 (115) can transmit pieces of the error information of all the PEnc (60, 70, 80, and 90) and the PDec (62, 72, 82, and 92) to the node1 (15) by the OAM Extended Return in the single transmission unit of Downlink, and can eliminate the latency of steps S6 to S8 in Fig. 8 and steps S16 to S18 in Fig. 9.

As described above, in the second embodiment, the Root device (15) of the node 1 transmits the OAM Payload of the OAM Extended Read by including transmission request commands for the pieces of error information of all the PEnc (60, 70, 80, and 90) and the PDec (62, 72, 82, and 92) in the Leaf device (115), and the Leaf device (115) of the node 2 that has received the OAM Extended Read transmits the OAM payload of the OAM Return by including the above-described error information. Therefore, the pieces of error information of all the PEnc (60, 70, 80, and 90) and the PDec (62, 72, 82, and 92) in the Leaf device (115) can be transmitted by the single OAM Return, and the latency to complete the transmission of the error information can be eliminated.

### (Third Embodiment)

In the first and second embodiments, the registers (PEnc status Reg [n:0] and PDec status Reg [n:0]) for storing the error information are added to the DLL Register (67) of the Leaf device (115) of the node2. However, there is a problem of when and how to clear the error information in these registers.

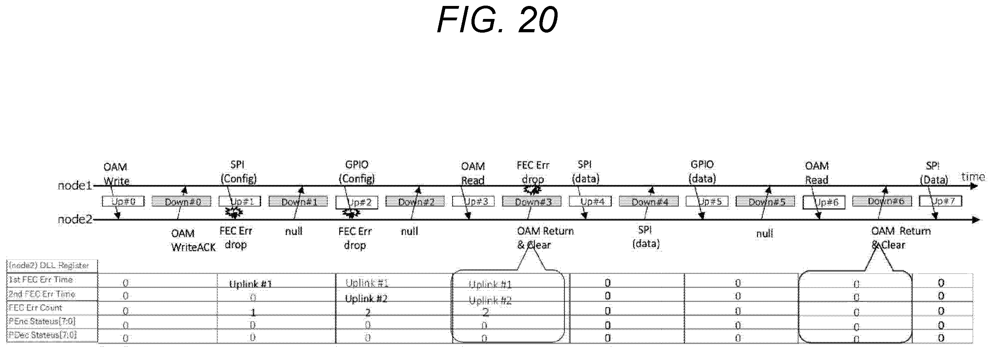

Fig. 20 is a diagram illustrating a first example of a defect caused by clearing of PEnc status Reg [n:0] and PDec status Reg [n:0]. In Fig. 20, in a case where node 2 clears the above-described registers after transmitting OAM Return in Downlink#3, in a case where node 1 cannot receive the OAM Return for some reason, even if the node 1 requests error information again with OAM Read from the node 2 in Uplink#6, the error information has already been cleared and thus Downlink#6 transmits wrong information to the node 1. Originally, the error information held in the register at the time of Uplink#3 needs to be transmitted in the Downlink#6, but if the register is cleared after the Downlink#3 transmits the OAM Return including the error information, the error information cannot be retransmitted thereafter.

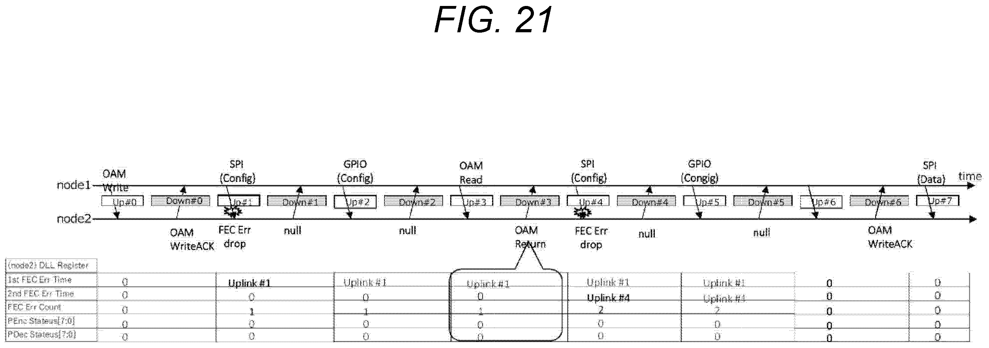

Fig. 21 is a diagram illustrating a second example of the defect caused by clearing of PEnc status Reg [n:0] and PDec status Reg [n:0]. In Fig. 21, in a case where the node 1 transmits a clear signal to the node 2 after receiving the OAM Return in the Downlink#3, the OAM including the clear signal is transmitted in the Uplink#6. If a new error occurs in Uplink#4 during that time, the error information is cleared when the Uplink#6 transmits the OAM, and the error information of the Uplink#4 cannot be transmitted to the node1.

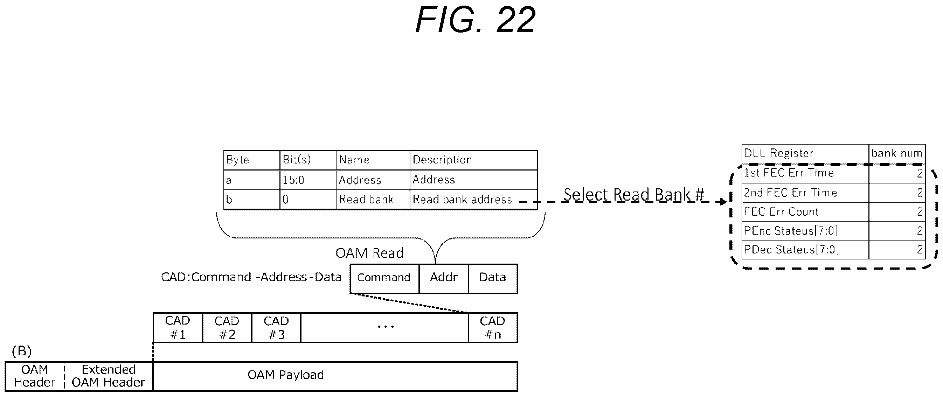

Figs. 11 and 22 are diagrams illustrating a first solution to solve the defects of Figs. 20 and 21. Fig. 22 illustrates a configuration of the OAM Read. As illustrated in Fig. 22, in a case where the i-th byte (Mode Select [1: 0]) of the OAM Header of the OAM Read indicates the Extended OAM Header (2'b01) and the CAD command is the OAM Read, the b-th byte specifying Read Bank is added to the subsequent address section.

Register of the error information newly added to DLL Register (67) has two Banks, and the error information corresponding to the specified Read Bank is selected.

Next, a Leaf device (115) of the node2 clears Bank information that a Root device (15) of the node1 has not specified in the Read Bank. The Root device (15) sequentially specifies a plurality of banks. Therefore, this indicates that the error information of the bank not specified by the Root device (15) has already been received by the Root device (15). Therefore, in a case where the Root device (15) specifies any bank, the error information of the other banks can be cleared.

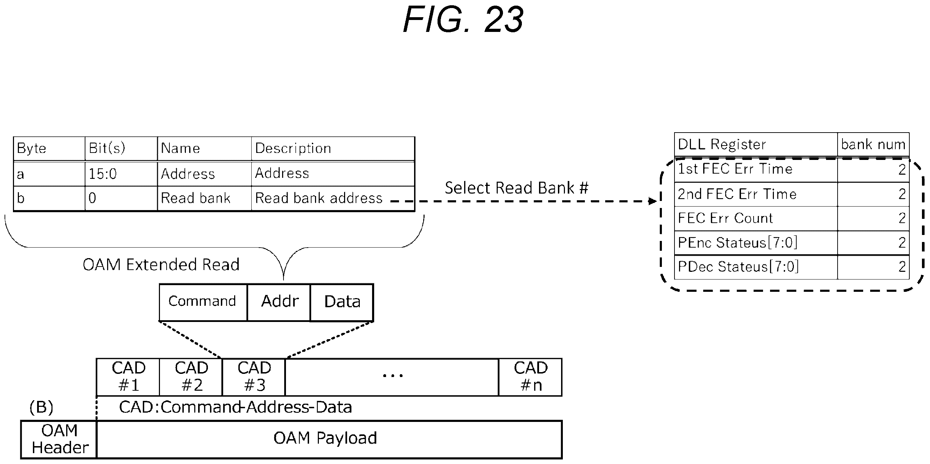

Figs. 16 and 23 are diagrams illustrating a second solution to solve the defects of Figs. 20 and 21. In the second solution, OAM Extended Read is transmitted from the node1 to the node2. Fig. 23 is a diagram illustrating a configuration of the OAM Extended Read.

The b-th byte specifying the Read Bank is added to the address section following the OAM Extended Read command. In the b-th byte, an address of the bank to be read is described.

The node2 that has received the OAM Extended Read command reads the error information of the bank corresponding to the address of the Read Bank from the DLL Register (67), and transmits the error information by including the error information in OAM Payload of OAM Extended Return.

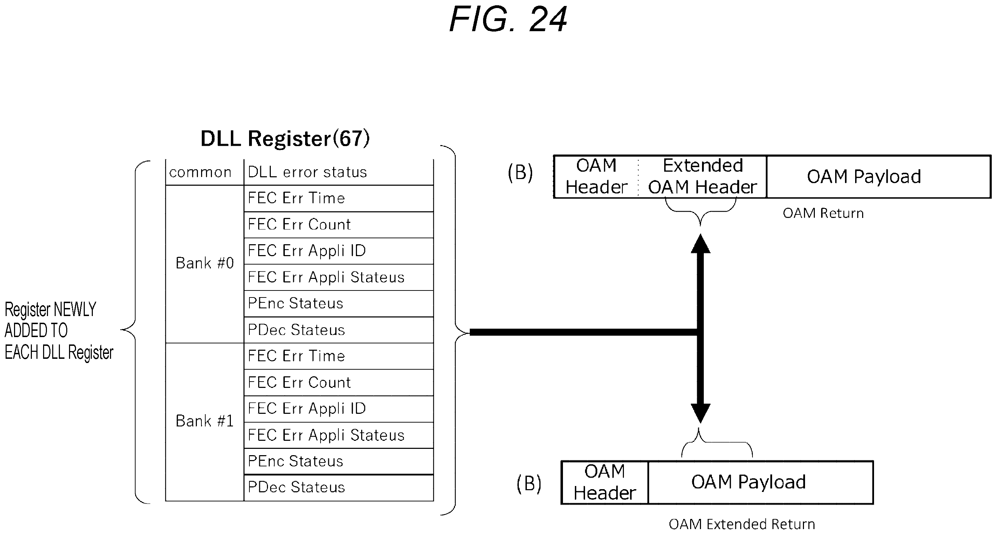

Fig. 24 is a diagram illustrating a configuration of the DLL Register (67) of the Leaf device (115) according to a third embodiment. The DLL Register (67) illustrated in Fig. 24 includes DLL error status as information common to two banks of Bank#0 and Bank#1. Furthermore, the DLL Register (67) stores the error information for each of the Bank#0 and the Bank#1. The error information includes, for example, FEC Err Time, FEC Err Count, FEC Err Appli ID, FEC Err Appli Status, PEnc Status, and PDEc Status.

In the first solution, as illustrated in the upper right of Fig. 24, the error information of one of the banks is included in the Extended OAM Header of the OAM Return and transmitted to the node1.

In the second solution, as illustrated in the lower right of Fig. 24, the error information of one of the banks is included in the OAM Payload as a response result of an OAM Extended Return command and transmitted to the node1.

As described above, in a case where a transmission request of the error information of any one of the plurality of banks is included in the OAM Read command, the OAM unit (65) of the Leaf device (115) includes the error information of the corresponding bank in the response result of the OAM Return.

The DLL (66) clears the error information of the banks other than the bank for which the transmission request has been made by the OAM Read from the DLL Register (67). The DLL (66) stores the newly generated error information in corresponding fields of all the banks of the DLL Register (67) for each transmission unit.

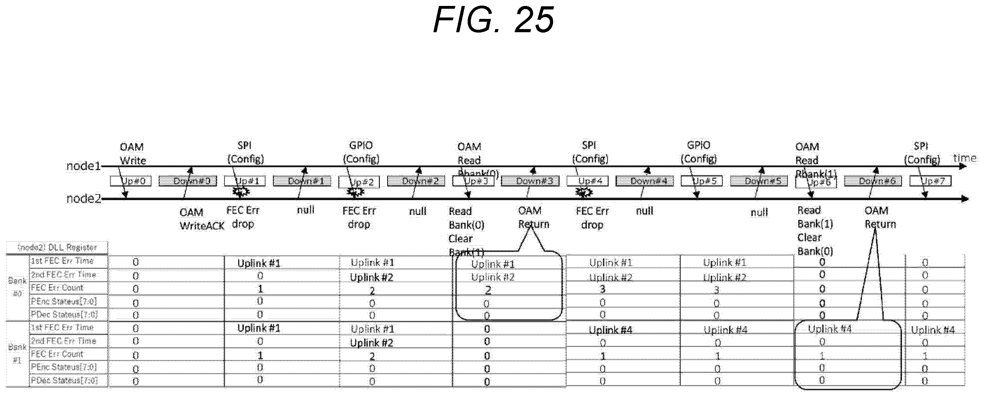

Fig. 25 is a diagram illustrating a first example of performing data transfer between the node1 and the node2 by applying the third embodiment.

All of Registers (PEnc status Reg [n:0] and PDec status Reg [n:0]) of the error information added to the DLL Register (67) by Power on are reset.

In Uplink#0, the node1 transmits OAM Write to the node2. In Downlink#0, since the received OAM Write has been successfully written, the node2 transmits a write result as WriteACK to the node1.

In Uplink#1, the node1 transmits Config Data of SPI to the node2, but is affected by noise during transmission. Although the node2 attempts to recover Error in received Data by FEC, the node2 discards the received Data because FEC Error occurs, and writes the error information in the DLL Register (67). This error information (1st FEC Err Time and FEC Err Count) is written to both the Bank#0 and the Bank#1 of the DLL Register (67). In Downlink#1, the node2 transmits empty data to the node1, but the node1 does not notice an abnormality in the received response result from the node2.

In Uplink#2, the node1 transmits Config Data of GPIO to the node2, but is affected by noise during transmission. Although the node2 attempts to recover Error in received Data by FEC, the node2 discards the received Data because FEC Error occurs, and writes the error information in the DLL Register (67). This error information (2nd FEC Err Time and FEC Err Count) is written to both the Bank#0 and the Bank#1 of the DLL Register (67). In Downlink#2, the node2 transmits empty data to the node1, but the node1 does not notice an abnormality in the received response result from the node2.

In the Uplink#3, to know transmission results of Uplink#0 to Uplink#3, the node1 transmits the OAM Read specifying Read Bank#0 to the node2. The node2 clears error information of the Bank other than the Read Bank specified in the received OAM Read. In Downlink#3, the node2 transmits the error information of the Bank#0 of the DLL Register (67) specified by the address of the received OAM Read command to the node1 as a result of the OAM Return. From the received OAM Return, the node1 detects that the node2 has not been able to receive the Uplink#1 and the Uplink#2.

In the Uplink#4, the node1 transmits Config Data of SPI to the node2 again, but is affected by noise during transmission. Although the node2 attempts to recover Error in received Data by FEC, the node2 discards the received Data because FEC Error occurs, and writes the error information in the DLL Register (67). The error information (1st FEC Err Time and FEC Err Count) is written to the Bank#0 and the Bank#1 of the DLL Register (67), but the FEC Err Time of the Bank#0 has already been written and cannot be written. However, the FEC Err Count is added from 2 to 3.

Meanwhile, the write result is reflected in the 1st FEC Err Time and the FEC Err Count on the Bank#1 side cleared in the Uplink#3. In Downlink#4, the node2 transmits empty data to the node1.

In Uplink#5, the node1 transmits Config Data of GPIO to the node2. The node2 writes Config of GPIO from the received Data. In Downlink#5, the node2 transmits empty data to the node1.

In Uplink#6, to know the transmission results of Uplink#4 to Uplink#6, the node1 transmits the OAM Read specifying Read Bank#1 to the node2. The node2 clears the Bank information of the Bank other than the Read Bank specified in the received OAM Read. In Downlink#6, the node2 transmits the error information of the Bank#1 of the DLL Register (67) specified by the address of the received OAM Read command to the node1 as a result of the OAM Return. From the received OAM Return, the node1 detects that the node2 has not been able to receive the Uplink#4.

In Uplink#7, the node1 transmits the Config Data of SPI again to the node2. The node2 writes Config of SPI from the received Data.

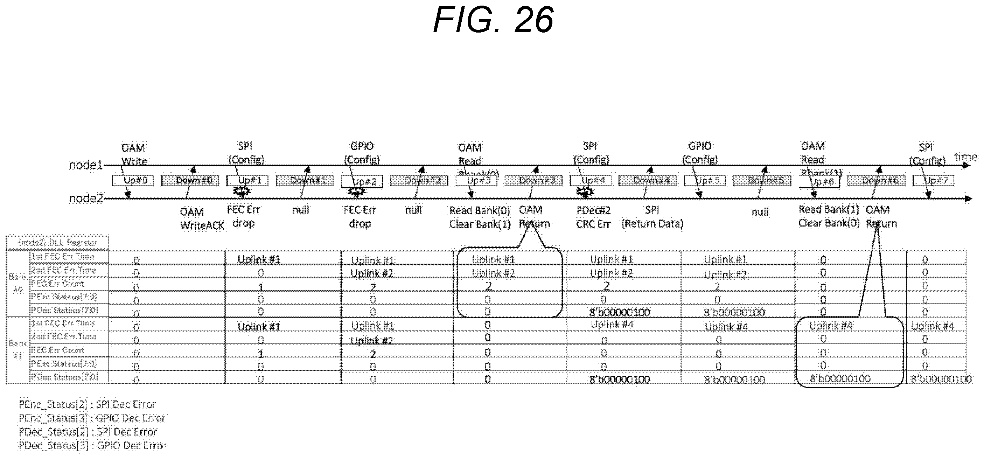

Fig. 26 is a diagram illustrating a second example of performing the data transfer between the node1 and the node2 by applying the third embodiment.

The Uplink#0 to the Downink#3 are the same as those in Fig. 25. In the Uplink#4, the node1 transmits Config Data of SPI to the node2 again, but is affected by noise during transmission. Although the node2 recovers Error in the received Data by FEC, CRC Error occurs in PDec#2 (82). The node2 records information of the occurrence of the CRC error in PDec#2 Register (83), and writes, in the PDec Status [2] of the Bank#0 and the Bank#1 of the DLL Register (67), 1'b1 indicating that the CRC error has occurred in the PDec#2. In the Downlink#4, the node2 transmits SPI Return Data to the node1.

In the Uplink#5, the node1 transmits the Config Data of GPIO to the node2. The node2 writes the Config of GPIO from the received Data. In the Downlink#5, the node2 transmits empty data to the node1.

In the Uplink#6, to know the transmission results of the Uplink#4 to the Uplink#6, the node1 transmits the OAM Read specifying the Read Bank#1 to the node2. The node2 clears the Bank information of the Bank other than the Read Bank specified in the received OAM Read. In the Downlink#6, the node2 transmits data including the Bank#1 of the DLL Register (67) specified by the address of the received OAM Read command to the node1 as a result of the OAM Return. From the received OAM Return, the node1 recognizes that CRC Error has occurred when the node2 receives the SPI in the Uplink#4.

In the Uplink#7, the node1 transmits the Config Data of SPI again to the node2. The node2 writes Config of SPI from the received Data.

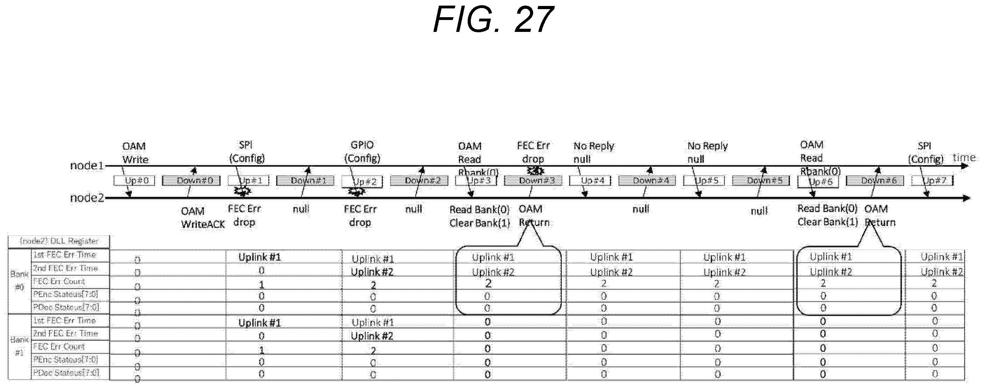

Fig. 27 is a diagram illustrating a third example of performing the data transfer between the node1 and the node2 by applying the third embodiment.

The Uplink#0 to the Downink#2 are the same as those in Fig. 25. In the Uplink#3, to know the transmission results of the Uplink#0 to the Uplink#3, the node1 transmits the OAM Read specifying the Read Bank#0 to the node2. The node2 clears the Bank information of the Bank other than the Read Bank specified in the received OAM Read. In the Downlink#3, the node2 transmits the data including the Bank#0 of the DLL Register (67) specified by the address of the received OAM Read command to the node1 as a result of the OAM Return, but is affected by noise during transmission. Although the node1 attempts to recover Error in the received Data by FEC, the node1 discards the received Data and writes the error information in the DLL Register (57).

In the Uplink#4, the node1 waits for the response result of the Uplink#3. In the Downlink#4, the node2 transmits empty data to the node1.

In the Uplink#5, the node1 waits for the response result of the Uplink#3. In the Downlink#5, the node2 transmits empty data to the node1.

In the Uplink#6, to know the transmission results of the Uplink#1 to the Uplink#6, the node1 transmits the OAM Read specifying the Read Bank#0 to the node2 again. In the Downlink#6, the node2 transmits the data including the Bank#0 of the DLL Register (67) specified by the address of the received OAM Read command to the node1 as a result of the OAM Return. Furthermore, the Bank information of the banks other than the Bank#1 is cleared. From the received OAM Return, the node1 detects that the node2 has not been able to receive the Uplink#1/#2.

In Uplink#7, the node1 transmits the Config Data of SPI again to the node2. The node2 writes Config of SPI from the received Data.

As described above, in the third embodiment, the various types of error information including the error information of all the PEnc (60, 70, 80, and 90) and the PDec (62, 72, 82, and 92) in the Leaf device (115) of the node 2 are stored in the DLL Register (67) for each bank, and when a bank is specified from the Root device (15) of the node 1 and the transmission request of the error information is given, the error information of the specified bank is returned to the Root device (15) by the OAM Return, and the error information of the non-specified bank is cleared. Therefore, when the Root device (15) fails to acquire the error information of the specified bank, and the Root device (15) specifies the same bank and makes the transmission request again, the error information of the bank can be correctly retransmitted. Therefore, even if the Root device (15) fails to acquire the error information from the Leaf device (115), the Root device (15) can correctly acquire the error information by making the transmission request again.

### (Fourth embodiment)

In the above-described third embodiment, the example in which the various types of error information including the pieces of error information of all the PEnc (60, 70, 80, and 90) and PDec (62, 72, 82, and 92) in the Leaf device (115) of the node 2 are stored in the DLL register (67) for each bank has been described. However, the types of error information stored in the DLL register (67) for each bank are arbitrary, and it is not always necessary to store, in the DLL register (67) for each bank, the error information of all the PEnc (60, 70, 80, and 90) and PDec (62, 72, 82, and 92) in the Leaf device (115). The error information may be error correction disabled information detected by using a CRC. The error correction disabled information may include the number of times of error detection.

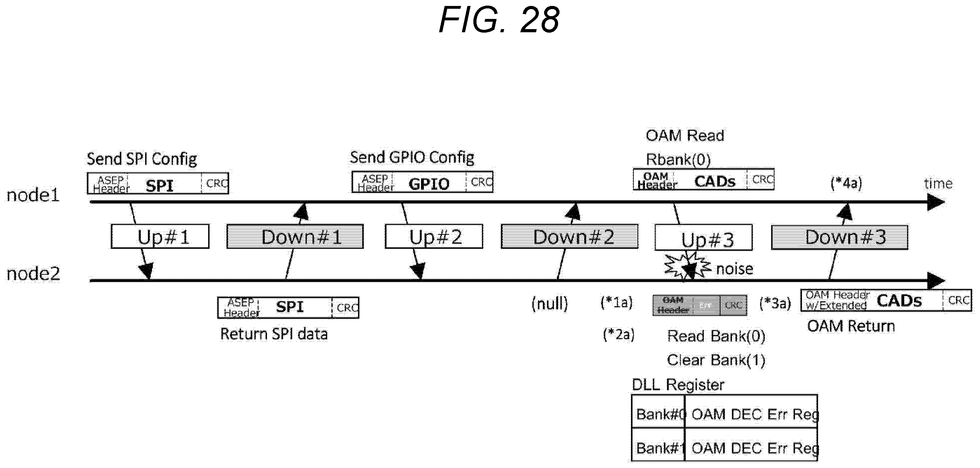

Fig. 28 is a diagram illustrating an example in which DLL Register (67) includes two Bank#0 and Bank#1 and OAM DEC Err Register is provided for each bank. The OAM DEC Err Register is a register that stores the number of times PDec#0 of an OAM unit has detected an error.

In Uplink#3 of Fig. 28, the PDec#0 (62) detects an error in an OAM packet on the basis of the CRC included in the OAM packet. When an error is detected, the PDec#0 (62) sends an error detection signal CRC Err to DLL (66). The DLL (66) counts up values of OAM DEC Error Regs of the Bank#0 and Bank#1 in the DLL Register (67).

In Downlink#3, the DLL (66) of the node2 generates OAM Return to node 1 via the PEnc#0 (60). In a case where the node2 transmits the OAM return, which is a response to the node1, an OAM packet including Extended OAM Header in which the register value of the OAM DEC Err Reg of the Bank#0 of the DLL Register (67) is added to an existing OAM header of the OAM packet is generated. An ECU (10) can determine whether or not OAM Read received by the Leaf device (115) located at the node2 has normally operated from the value of the OAM DEC Err Reg included in the OAM header received by the Root device (15) located at the node1.

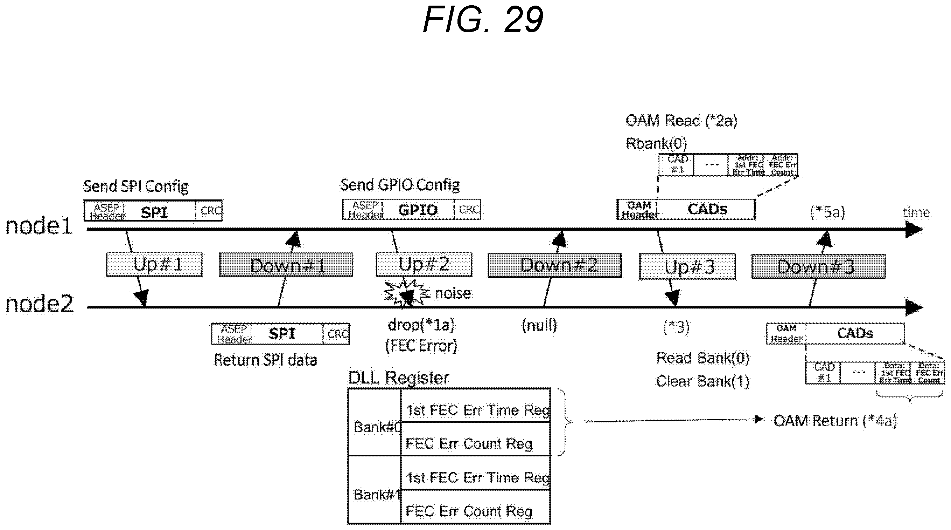

Fig. 29 is a diagram illustrating an example in which 1st FEC Err Time Register and FEC Err Count Register are provided for each of Bank#0 and Bank#1 in the DLL Register (67). The DLL (66) writes occurrence time of an FEC error in the 1st FEC Err Time Regs of the Bank#0 and the Bank#1 of the DLL Register (67) in the case of the first FEC error, and does not overwrite the occurrence time in the case where the occurrence time of the FEC error has already been written in the 1st FEC Err Time Regs. In addition, the DLL (66) counts up the FEC Err Count Regs of the Bank#0 and the Bank#1 of the DLL Register (67) each time the FEC error occurs.

In Uplink#2, in PhyL (300) of the node2, the FEC error occurs, exceeding an error correction limit of FEC in a data payload of a received PHY format (Fig. 4A (D)). In this case, the PhyL (300) discards the data payload in which the FEC error has occurred, and notifies a controller (116) that the FEC error has occurred.

The controller (116) notifies the DLL (66) that the FEC error has occurred, and the DLL (66) writes the occurrence time of the FEC error in the 1st FEC Err Time Regs of the Bank#0 and the Bank#1 of the DLL Register (67) in the case of the first FEC error, and does not overwrite the occurrence time in the case where the occurrence time of the FEC error has already been written in the 1st FEC Err Time Regs. In addition, the DLL (66) counts up the FEC Err Count Regs of the Bank#0 and the Bank#1 of the DLL Register (67) each time the FEC error occurs (*1a).

In Uplink#3, the ECU (10) transmits, via the node1, the OAM packet (Fig. 4B (A)) including an OAM Read command for confirming whether or not the node2 has been able to normally receive SPI and GPIO Config information to the node2.

In the OAM payload of the OAM packet (Fig. 4B (A)), bank information to be read by the DLL Register (67) of the node 2 and Read Address indicating the 1st FEC Err Time Reg and the FEC Err Count Reg newly added to the DLL Register (67) are included together with the OAM Read command (*2a).

In the Downlink#3, the node2 reads each register value including the 1st FEC Err Time Reg and the FEC Err Count Reg of the Bank#0 of the DLL register (67) according to a read address of the OAM Read command received from the node1. The node2 adds the read register value as CAD to the OAM Payload as a result of OAM Return and transmits the OAM Return to the node1 (*4a). The OAM Read (first OAM packet) may include n pieces of first address information specifying n pieces of reception time information in the register and second address information specifying total number information in the register.

From the OAM Return received by the node1, the ECU (10) can know the number of times of FEC errors that have occurred in the node2 and the first FEC error occurrence time, and the ECU (10) recognizes that only config information of GPIO needs to be sent to the node2 (*5a).

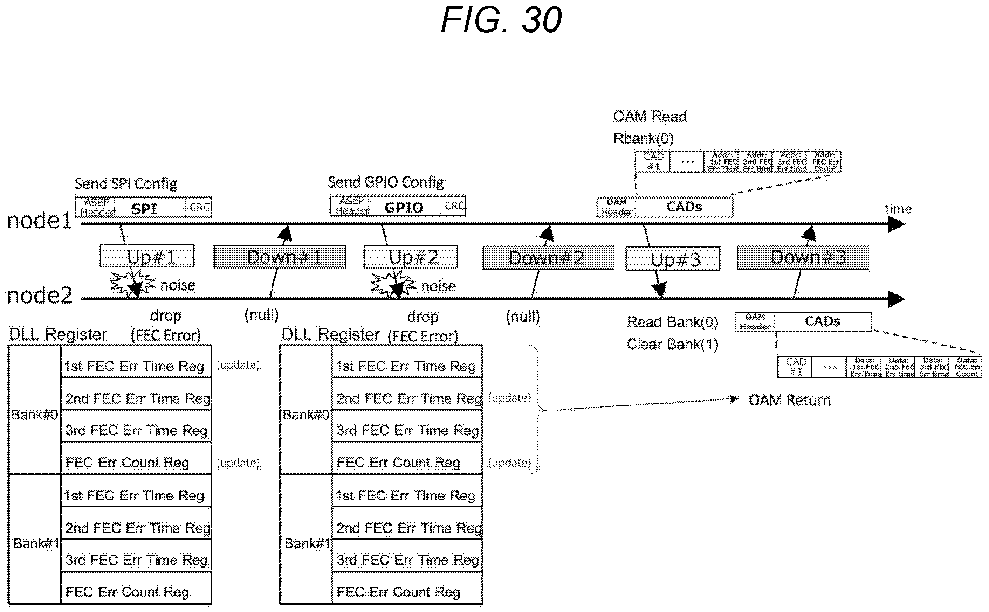

Fig. 30 is a diagram illustrating an example in which 1st FEC Err Time Register, 2nd FEC Err Time Register, 3rd FEC Err Time Register, and FEC Err Count Register are provided for each of the Bank#0 and the Bank#1 in the DLL Register (67). Note that how many FEC Err Time Registers are provided is optional. Therefore, the time when the FEC error occurred can be recorded in the FEC Err Time Reg in the DLL Register (67) three times from the first FEC error.

The node1 can read any register by the OAM Read. In the present example, the 2nd FEC Err Time and the 3rd FEC Err Time are added to the DLL Register (67) in Fig. 29.

The node1 also adds the addresses of the 2nd FEC Err Time and the 3rd FEC Err Time to the read address of the OAM Read, so that the node2 also returns the register values of the 2nd FEC Err Time and the 3rd FEC Err Time to the node1 by the OAM Return. The ECU (10) can know the FEC error occurrence time (Uplink#1, Uplink#2) of the first and second times and the number of FEC errors (two times) from the result of the OAM Return received by the node1.

As described above, in the fourth embodiment, arbitrary error information is stored in the DLL Register (67) for each bank, and when there is a transmission request of the error information by specifying the bank from the Root device (15) of the node 1, the Leaf device (115) of the node 2 can return the error information of the specified bank to the Root device (15) by the OAM Return.

Note that the present technology may have the following configurations.
(1) A communication device that alternately transmits and receives information to and from a communication partner device within a period allocated by a time division duplex (TDD) communication method, the communication device including:
   a PHY configured to receive a first transmission signal conforming to a predetermined communication protocol from the communication partner device, perform error correction for a plurality of first packets included in the first transmission signal, and transmit a second transmission signal to be transmitted to the communication partner device to the communication partner device;
   a LINK configured to separate the plurality of first packets, aggregate a plurality of second packets included in the second transmission signal, and transmits the aggregated second packets to the PHY;
   a plurality of decoders configured to decode the plurality of first packets; and
   a plurality of encoders configured to generate the plurality of second packets, in which
   the PHY includes
   an error information storage unit configured to store error information for each of the plurality of decoders and the plurality of encoders, and
   an operation, administration, and maintenance (OAM) unit configured to include the error information in one second packet of the plurality of second packets.
(2) The communication device according to (1), in which
   the error information storage unit stores the error information in which whether or not each of the plurality of decoders and the plurality of encoders has caused an error is represented by one bit.
(3) The communication device according to (1) or (2), in which
   the error information stored in the error information storage unit includes error information about each of a decoder and an encoder included in the OAM unit.
(4) The communication device according to any one of (1) to (3), in which
   the PHY performs the error correction for the plurality of first packets included in the first transmission signal,
   the LINK generates the second packet including error correction disabled information indicating that the PHY fails to correctly perform the error correction, and
   the error information includes reception time information of the first and second first packets that have been error-correction disabled in a transmission unit of the TDD communication method, total number information of the first packets that have been error-correction disabled in the transmission unit, and identification information of the first and second first packets that have been error-correction disabled in the transmission unit.
(5) The communication device according to any one of (1) to (4), in which
   the error information includes error information of the LINK.
(6) The communication device according to (5), in which
   the LINK includes
   a first storage unit configured to store information indicating a case of having no transmission destination information in a schedule table or that an abnormality of having no transmission destination itself has occurred,
   a second storage unit configured to store information indicating a case of having no received data or that an abnormality has occurred during a reception operation, and
   a third storage unit configured to store information indicating that received data is partially missing, and
   the error information of the LINK includes the pieces of information stored in the first storage unit, the second storage unit, and the third storage unit.
(7) The communication device according to any one of (1) to (6), in which
   the plurality of first packets includes at least one of an application packet or a first OAM packet, and
   the second packet generated by the OAM unit includes a second OAM packet generated in response to reception of the first OAM packet.
(8) The communication device according to (7), in which
   the first OAM packet includes a first header and a first payload,
   the first header or the first payload includes a transmission request of the error information, and
   the OAM unit includes the error information in the second OAM packet in a case where the first OAM packet includes the transmission request of the error information.
(9) The communication device according to (8), in which
   the second OAM packet includes a second header and a second payload,
   the transmission request of the error information is included in the first header, and
   the OAM unit includes the error information in the second header of the second OAM packet in a case where the first header includes the transmission request of the error information.
(10) The communication device according to (9), in which
   the second header includes mode selection information, and
   the mode selection information is set to a Reserved bit of OAM Header of ASA spec Ver 1.01 in a case where the second header includes the error information.
(11) The communication device according to (8), in which
   the second OAM packet includes a second header and a second payload,
   the transmission request of the error information is included in the first payload, and
   the OAM includes the error information in the second payload of the second OAM packet in a case where the first payload includes the transmission request of the error information.
(12) The communication device according to any one of (7) to (11), in which
   the error information storage unit includes a plurality of banks configured to store pieces of the error information generated in different transmission units of the TDD communication method, and
   the OAM unit includes the error information of a corresponding bank in the second OAM packet in a case where a transmission request of the error information of any one of the plurality of banks is included in the first OAM packet.
(13) The communication device according to (12), in which
   the LINK clears the error information of the banks other than the bank for which the transmission request has been made in the first OAM packet from the error information storage unit.
(14) The communication device according to (13), in which
   the LINK stores the error information that has been newly generated in at least one of the cleared banks in the error information storage unit for each transmission unit.
(15) A communication device that alternately transmits and receives information to and from a communication partner device within a period allocated by a time division duplex (TDD) communication method, the communication device including:
   a PHY configured to receive a first transmission signal conforming to a predetermined communication protocol from the communication partner device and perform error correction for a plurality of first packets included in the first transmission signal; and
   a LINK configured to separate the plurality of first packets after the error correction and generate a second packet including error correction disabled information of the first packet for which the error correction has not been correctly performed, in which
   the PHY transmits a second transmission signal including the second packet to the communication partner device,
   the plurality of first packets includes a first OAM packet,
   the second packet includes a second OAM packet,
   the LINK includes a register including a plurality of banks that stores pieces of the error correction disabled information generated in different transmission units of the TDD communication method, and
   the LINK includes the error correction disabled information of a corresponding bank in the register in the second OAM packet in a case where the first OAM packet includes a transmission request of the error correction disabled information of any one of the plurality of banks.
(16) The communication device according to (15), in which the error correction disabled information includes reception time information of an application packet that has been error-correction disabled first in the transmission unit of the transmission signal and total number information of application packets that have been error-correction disabled in the transmission unit,
   the first OAM packet includes information specifying one bank among the plurality of banks and address information of the register in which the error correction disabled information of the specified bank is stored, and
   the address information in the first OAM packet includes first address information specifying the reception time information in the register and second address information specifying the total number information in the register.
(17) The communication device according to (15), in which
   the error correction disabled information includes reception time information of n application packets (n is an integer of 1 or more) from first that have been error-correction disabled in the transmission unit of the transmission signal and total number information of application packets that have been error-correction disabled in the transmission unit,
   the first OAM packet includes information specifying one bank among the plurality of banks and address information of the register in which the error correction disabled information of the specified bank is stored, and
   the address information in the first OAM packet includes the n pieces of first address information specifying the n pieces of the reception time information in the register and second address information specifying the total number information in the register.
(18) The communication device according to (15), in which
   the error correction disabled information includes reception time information of an application packet that has been error-correction disabled first in a transmission unit of the transmission signal, total number information of application packets that have been error-correction disabled in the transmission unit, identification information of the application packet that has been error-correction disabled first in the transmission unit of the transmission signal, and bit string information in which whether or not error correction is disabled is allocated to each application packet in units of bits, the application packet being transmitted in the transmission unit,
   the first OAM packet includes information specifying one bank among the plurality of banks and address information of the register in which the error correction disabled information of the specified bank is stored, and
   the address information in the first OAM packet includes first address information specifying the reception time information in the register, second address information specifying the total number information in the register, third address information specifying the identification information in the register, and fourth address information specifying the bit string information in the register.
(19) A communication device that alternately transmits and receives information to and from a communication partner device within a period allocated by a time division duplex (TDD) communication method, the communication device including:
   a LINK configured to generate a transmission packet including a plurality of first packets; and
   a PHY configured to generate a first transmission signal conforming to a predetermined communication protocol on a basis of the transmission packet, transmit the first transmission signal to the communication partner device, and receive a second transmission signal from the communication partner device, in which
   the LINK includes an OAM unit configured to generate, for the communication partner device, a first OAM packet including a transmission request of error information of a plurality of decoders and a plurality of encoders included in the communication partner device, and extract the error information from a second OAM packet transmitted from the communication partner device in response to the first OAM packet, and
   the plurality of first packets includes an application packet and the first OAM packet.
(20) A communication system including:
   a first communication device; and
   a second communication device configured to alternately transmit and receive information to and from the first communication device within a period allocated by a time division duplex (TDD) communication method,
   the first communication device including
   a PHY configured to receive a first transmission signal conforming to a predetermined communication protocol from the second communication device, perform error correction for a plurality of first packets included in the first transmission signal, and transmit a second transmission signal to be transmitted to the second communication device to the second communication device,
   a LINK configured to separate the plurality of first packets, aggregate a plurality of second packets included in the second transmission signal, and transmits the aggregated second packets to the PHY,
   a plurality of decoders configured to decode the plurality of first packets, and
   a plurality of encoders configured to generate the plurality of second packets, and
   the PHY including
   an error information storage unit configured to store error information for each of the plurality of decoders and the plurality of encoders, and
   an operation, administration, and maintenance (OAM) unit configured to include the error information in one second packet of the plurality of second packets.

Aspects of the present disclosure are not limited to the above-described individual embodiments, but include various modifications that can be conceived by those skilled in the art, and the effects of the present disclosure are not limited to the above-described contents. That is, various additions, modifications, and partial deletions are possible without departing from the conceptual idea and spirit of the present disclosure derived from the matters defined in the claims and equivalents thereof.

### REFERENCE SIGNS LIST

- 3: Communication system
- 4: Cable
- 10: ECU
- 15: Root device
- 16: Controller
- 18: Timer
- 20: PEnc#1
- 22: PDec#1
- 30: PEnc#2
- 32: PDec#2
- 40: PEnc#3
- 42: PDec#3
- 50: PEnc#0
- 52: PDec#0
- 55: OAM unit
- 57: DLL Register
- 58: Frame constructor
- 59: Frame de-constructor
- 65: OAM unit
- 60: PEnc#0
- 62: PDec#0
- 67: DLL Register
- 68: Frame constructor
- 69: Frame de-constructor
- 70: PEnc#1
- 71, 73, 81, 83: Register
- 72: PDec#1
- 80: PEnc#2
- 82: PDec#2
- 90: PEnc#3
- 92: PDec#3
- 110: Uplink Tx
- 115: Leaf device
- 116: Controller
- 118: Timer
- 180: Downlink Rx
- 200: Camera
- 310: Downlink Tx
- 380: Uplink Rx

## Claims

1. A communication device that alternately transmits and receives information to and from a communication partner device within a period allocated by a time division duplex (TDD) communication method, the communication device comprising:
a PHY configured to receive a first transmission signal conforming to a predetermined communication protocol from the communication partner device, perform error correction for a plurality of first packets included in the first transmission signal, and transmit a second transmission signal to be transmitted to the communication partner device to the communication partner device;
a LINK configured to separate the plurality of first packets, aggregate a plurality of second packets included in the second transmission signal, and transmits the aggregated second packets to the PHY;
a plurality of decoders configured to decode the plurality of first packets; and
a plurality of encoders configured to generate the plurality of second packets, wherein
the PHY includes
an error information storage unit configured to store error information for each of the plurality of decoders and the plurality of encoders, and
an operation, administration, and maintenance (OAM) unit configured to include the error information in one second packet of the plurality of second packets.

2. The communication device according to claim 1, wherein
the error information storage unit stores the error information in which whether or not each of the plurality of decoders and the plurality of encoders has caused an error is represented by one bit.

3. The communication device according to claim 1, wherein
the error information stored in the error information storage unit includes error information about each of a decoder and an encoder included in the OAM unit.

4. The communication device according to claim 1, wherein
the PHY performs the error correction for the plurality of first packets included in the first transmission signal,
the LINK generates the second packet including error correction disabled information indicating that the PHY fails to correctly perform the error correction, and
the error information includes reception time information of the first and second first packets that have been error-correction disabled in a transmission unit of the TDD communication method, total number information of the first packets that have been error-correction disabled in the transmission unit, and identification information of the first and second first packets that have been error-correction disabled in the transmission unit.

5. The communication device according to claim 1, wherein
the error information includes error information of the LINK.

6. The communication device according to claim 5, wherein
the LINK includes
a first storage unit configured to store information indicating a case of having no transmission destination information in a schedule table or that an abnormality of having no transmission destination itself has occurred,
a second storage unit configured to store information indicating a case of having no received data or that an abnormality has occurred during a reception operation, and
a third storage unit configured to store information indicating that received data is partially missing, and
the error information of the LINK includes the pieces of information stored in the first storage unit, the second storage unit, and the third storage unit.

7. The communication device according to claim 1, wherein
the plurality of first packets includes at least one of an application packet or a first OAM packet, and
the second packet generated by the OAM unit includes a second OAM packet generated in response to reception of the first OAM packet.

8. The communication device according to claim 7, wherein
the first OAM packet includes a first header and a first payload,
the first header or the first payload includes a transmission request of the error information, and
the OAM unit includes the error information in the second OAM packet in a case where the first OAM packet includes the transmission request of the error information.

9. The communication device according to claim 8, wherein
the second OAM packet includes a second header and a second payload,
the transmission request of the error information is included in the first header, and
the OAM unit includes the error information in the second header of the second OAM packet in a case where the first header includes the transmission request of the error information.

10. The communication device according to claim 9, wherein
the second header includes mode selection information, and
the mode selection information is set to a Reserved bit of OAM Header of ASA spec Ver 1.01 in a case where the second header includes the error information.

11. The communication device according to claim 8, wherein
the second OAM packet includes a second header and a second payload,
the transmission request of the error information is included in the first payload, and
the OAM includes the error information in the second payload of the second OAM packet in a case where the first payload includes the transmission request of the error information.

12. The communication device according to claim 7, wherein
the error information storage unit includes a plurality of banks configured to store pieces of the error information generated in different transmission units of the TDD communication method, and
the OAM unit includes the error information of a corresponding bank in the second OAM packet in a case where a transmission request of the error information of any one of the plurality of banks is included in the first OAM packet.

13. The communication device according to claim 12, wherein
the LINK clears the error information of the banks other than the bank for which the transmission request has been made in the first OAM packet from the error information storage unit.

14. The communication device according to claim 13, wherein
the LINK stores the error information that has been newly generated in at least one of the cleared banks in the error information storage unit for each transmission unit.

15. A communication device that alternately transmits and receives information to and from a communication partner device within a period allocated by a time division duplex (TDD) communication method, the communication device comprising:
a PHY configured to receive a first transmission signal conforming to a predetermined communication protocol from the communication partner device and perform error correction for a plurality of first packets included in the first transmission signal; and
a LINK configured to separate the plurality of first packets after the error correction and generate a second packet including error correction disabled information of the first packet for which the error correction has not been correctly performed, wherein
the PHY transmits a second transmission signal including the second packet to the communication partner device,
the plurality of first packets includes a first OAM packet,
the second packet includes a second OAM packet,
the LINK includes a register including a plurality of banks that stores pieces of the error correction disabled information generated in different transmission units of the TDD communication method, and
the LINK includes the error correction disabled information of a corresponding bank in the register in the second OAM packet in a case where the first OAM packet includes a transmission request of the error correction disabled information of any one of the plurality of banks.

16. The communication device according to claim 15, wherein
the error correction disabled information includes reception time information of an application packet that has been error-correction disabled first in the transmission unit of the transmission signal and total number information of application packets that have been error-correction disabled in the transmission unit,
the first OAM packet includes information specifying one bank among the plurality of banks and address information of the register in which the error correction disabled information of the specified bank is stored, and
the address information in the first OAM packet includes first address information specifying the reception time information in the register and second address information specifying the total number information in the register.

17. The communication device according to claim 15, wherein
the error correction disabled information includes reception time information of n application packets (n is an integer of 1 or more) from first that have been error-correction disabled in the transmission unit of the transmission signal and total number information of application packets that have been error-correction disabled in the transmission unit,
the first OAM packet includes information specifying one bank among the plurality of banks and address information of the register in which the error correction disabled information of the specified bank is stored, and
the address information in the first OAM packet includes the n pieces of first address information specifying the n pieces of the reception time information in the register and second address information specifying the total number information in the register.

18. The communication device according to claim 15, wherein
the error correction disabled information includes reception time information of an application packet that has been error-correction disabled first in a transmission unit of the transmission signal, total number information of application packets that have been error-correction disabled in the transmission unit, identification information of the application packet that has been error-correction disabled first in the transmission unit of the transmission signal, and bit string information in which whether or not error correction is disabled is allocated to each application packet in units of bits, the application packet being transmitted in the transmission unit,
the first OAM packet includes information specifying one bank among the plurality of banks and address information of the register in which the error correction disabled information of the specified bank is stored, and
the address information in the first OAM packet includes first address information specifying the reception time information in the register, second address information specifying the total number information in the register, third address information specifying the identification information in the register, and fourth address information specifying the bit string information in the register.

19. A communication device that alternately transmits and receives information to and from a communication partner device within a period allocated by a time division duplex (TDD) communication method, the communication device comprising:
a LINK configured to generate a transmission packet including a plurality of first packets; and
a PHY configured to generate a first transmission signal conforming to a predetermined communication protocol on a basis of the transmission packet, transmit the first transmission signal to the communication partner device, and receive a second transmission signal from the communication partner device, wherein
the LINK includes an OAM unit configured to generate, for the communication partner device, a first OAM packet including a transmission request of error information of a plurality of decoders and a plurality of encoders included in the communication partner device, and extract the error information from a second OAM packet transmitted from the communication partner device in response to the first OAM packet, and
the plurality of first packets includes an application packet and the first OAM packet.

20. A communication system comprising:
a first communication device; and
a second communication device configured to alternately transmit and receive information to and from the first communication device within a period allocated by a time division duplex (TDD) communication method,
the first communication device including
a PHY configured to receive a first transmission signal conforming to a predetermined communication protocol from the second communication device, perform error correction for a plurality of first packets included in the first transmission signal, and transmit a second transmission signal to be transmitted to the second communication device to the second communication device,
a LINK configured to separate the plurality of first packets, aggregate a plurality of second packets included in the second transmission signal, and transmits the aggregated second packets to the PHY,
a plurality of decoders configured to decode the plurality of first packets, and
a plurality of encoders configured to generate the plurality of second packets, and
the PHY including
an error information storage unit configured to store error information for each of the plurality of decoders and the plurality of encoders, and
an operation, administration, and maintenance (OAM) unit configured to include the error information in one second packet of the plurality of second packets.
